# FASCICULE DE BREVET EUROPEEN

(11) **EP 4 244 095 B1**
(45) Date de publication et mention de la délivrance du brevet: **27.05.2026**
(21) Numéro de dépôt: 21820669.6
(22) Date de dépôt: 15.11.2021
(51) Int. Cl.: B60N 3/04, B64C 1/18

(54) **DISPOSITIF DE RETENTION DE LIQUIDE POUR EQUIPEMENT EMBARQUE PAR UN VEHICULE**
FLÜSSIGKEITSRÜCKHALTEVORRICHTUNG FÜR VON EINEM FAHRZEUG GETRAGENE AUSRÜSTUNG
LIQUID RETENTION DEVICE FOR EQUIPMENT CARRIED BY A VEHICLE

(30) Priorité: 16.11.2020 FR 2011730; 09.08.2021 FR 2108595
(43) Date de publication de la demande: 20.09.2023
(73) Titulaire: Daouk, Antar, 75016 Paris (FR)
(72) Inventeur: Daouk, Antar, 75016 Paris (FR)
(74) Mandataire: Cabinet Didier Martin
(86) Numéro de dépôt international: PCT/FR2021/052013
(87) Numéro de publication internationale: WO 2022/101592

(56) Documents cités:
- EP-A1- 3 081 430
- WO-A1-2017/100837
- CN-A- 108 297 945
- US-A- 3 605 166
- US-A- 4 211 447
- US-A- 5 827 022
- US-A1- 2010 272 944

## Description

### DOMAINE TECHNIQUE

La présente invention concerne le domaine technique général des équipements pour plancher intérieur de véhicule, et plus particulièrement celui des dispositifs permettant de supporter un matériel embarqué et de retenir un liquide s'écoulant de ce matériel.

La présente invention concerne plus précisément un dispositif de rétention de liquide destiné à être embarqué sur le plancher intérieur d'un véhicule et conçu et configuré pour recueillir un équipement embarqué par ledit véhicule, par exemple un siège ou une civière, notamment lors d'une mission d'évacuation.

La présente invention concerne également un véhicule comprenant un plancher intérieur.

### TECHNIQUE ANTERIEURE

Lors d'une mission d'évacuation d'un individu en pleine mer, il est souvent nécessaire de mettre en œuvre un hélicoptère muni d'une civière hélitreuillable. Celle-ci est destinée à être descendue de l'hélicoptère dans le liquide pour aller chercher l'individu à secourir, avec le concours de sauveteurs ou d'opérateurs spécialisés. La civière portant l'individu est ensuite remontée et positionnée sur le plancher interne de l'hélicoptère.

Il est ainsi connu d'installer un bac de rétention d'eau sur le plancher interne de l'hélicoptère. Ce bac de rétention connu est destiné à supporter, à la fin de l'opération de sauvetage, la civière trempée d'eau de mer. Le bac de rétention connu forme en outre un réceptacle recueillant l'eau de mer s'écoulant de la civière afin d'éviter qu'elle ne se déverse de manière incontrôlée à l'intérieur de l'hélicoptère en endommageant du matériel, par exemple médical, placé dans l'hélicoptère, ou des composants, en particulier électroniques, de l'hélicoptère. Ce bac de rétention connu comprend un fond et des bords recouverts d'une membrane imperméable, la civière étant réceptionnée sur le fond.

Or, la mise en œuvre de ce bac connu, bien qu'elle permette globalement de réaliser les tâches assignées, n'est pas totalement satisfaisante.

En effet, lors du trajet retour une fois l'intervention en mer effectuée, la civière baigne, pendant tout le trajet, dans l'eau de mer contenue dans le bac de rétention, ce qui est source d'inconfort pour la victime et les membres de l'équipe de secours, ces derniers pataugeant dans l'eau de mer contenue dans le bac de rétention. Une telle situation présente en outre le risque que les sauveteurs répandent de l'eau dans l'hélicoptère, occasionnant ainsi des dégâts matériels. De plus, les variations d'assiette plus ou moins brusques de l'hélicoptère et la rotation des pales de ce dernier secouent l'eau recueillie dans le bac de rétention, ce qui occasionne un risque d'éclaboussure non seulement des personnes mais également du matériel, y compris du matériel fragile (électrique ou électronique par exemple).

Par ailleurs, les bacs de rétention connus présentent une relative fragilité, et une durabilité qui n'est pas optimale, en raison du risque de déchirure de la membrane imperméable, notamment lors de l'accostage de la civière sur le bac, qui s'effectue généralement sans ménagement compte-tenu des circonstances d'urgence dans lesquelles s'effectue le plus souvent un sauvetage en mer.

Enfin, la vidange des bacs de rétention connus constitue généralement une opération fastidieuse et malaisée, qui induit un risque de renverser accidentellement une partie de l'eau dans l'hélicoptère.

Le document US-2010/272944A1 décrit un tapis de sol avec des lames espacées les unes des autres et s'élevant entre une surface inférieure et une surface supérieure apparente.

### EXPOSE DE L'INVENTION

Les objets assignés à la présente invention visent en conséquence à remédier aux différents inconvénients énumérés précédemment et à proposer un nouveau dispositif de rétention de liquide destiné à être embarqué sur le plancher intérieur d'un véhicule qui, tout en étant particulièrement robuste, fiable et durable, permet de réduire significativement, sinon d'éliminer, toute gêne provoquée par le liquide retenu par le dispositif de rétention.

Un autre objet de l'invention vise à proposer un nouveau dispositif de rétention de liquide destiné à être embarqué sur le plancher intérieur d'un véhicule pratique à utiliser et dont l'installation est à la fois rapide et facile.

Un autre objet de l'invention vise à proposer un nouveau dispositif de rétention de liquide destiné à être embarqué sur le plancher intérieur d'un véhicule permettant de recevoir une civière (ou tout autre équipement embarqué) dans des conditions de sécurité et de confort optimales, tant pour l'individu sur la civière que pour les éventuels opérateurs ou sauveteurs autour.

Un autre objet de l'invention vise à proposer un nouveau dispositif de rétention de liquide destiné à être embarqué sur le plancher intérieur d'un véhicule dont la maintenance peut être assurée de manière facile et dans des conditions de confort et de sécurité optimales.

Un autre objet de l'invention vise à proposer un nouveau dispositif de rétention de liquide destiné à être embarqué sur le plancher intérieur d'un véhicule dont la vidange peut être réalisée facilement et rapidement, à tout moment opportun.

Un autre objet de l'invention vise à proposer un nouveau dispositif de rétention de liquide destiné à être embarqué sur le plancher intérieur d'un véhicule, dont la conception lui permet de supporter de manière sécurisée un ou plusieurs équipements externes, tels qu'une civière.

Un autre objet de l'invention vise à proposer un nouveau dispositif de rétention de liquide destiné à être embarqué sur le plancher intérieur d'un véhicule, qui soit de construction particulièrement résistante et durable.

Un autre objet de l'invention vise à proposer un nouveau dispositif de rétention de liquide destiné à être embarqué sur le plancher intérieur d'un véhicule, qui soit fiable dans le temps, et qui ne nécessite qu'une maintenance minimale.

Un autre objet de l'invention vise à proposer un nouveau dispositif de rétention de liquide destiné à être embarqué sur le plancher intérieur d'un véhicule, dont la conception permet de limiter tout déversement intempestif de liquide hors du dispositif de rétention, y compris lorsque le véhicule est soumis à de brusques changements d'assiette.

Un autre objet de l'invention vise à proposer un nouveau dispositif de rétention de liquide destiné à être embarqué sur le plancher intérieur d'un véhicule dont la fabrication peut être facilement industrialisée à coût maîtrisé.

Un autre objet de l'invention vise à proposer un nouveau dispositif de rétention de liquide destiné à être embarqué sur le plancher intérieur d'un véhicule qui soit particulièrement léger et compact.

Un autre objet de l'invention vise à proposer un nouveau dispositif de rétention de liquide destiné à être embarqué sur le plancher intérieur d'un véhicule dont la structure est simple et ne comprend qu'un nombre limité de pièces distinctes.

Un autre objet de l'invention vise à proposer un nouvel véhicule particulièrement adapté pour recevoir sur son plancher intérieur un équipement, tel qu'une civière, dans des conditions de sécurité et de confort optimales.

Les objets assignés à la présente invention sont atteints à l'aide d'un dispositif de rétention de liquide conforme à l'objet de la revendication 1.

Les objets assignés à la présente invention sont également atteints à l'aide d'un véhicule conforme à l'objet de la revendication 14.

### DESCRIPTIF SOMMAIRE DES DESSINS

D'autres objets et avantages de l'invention ressortiront plus en détail à la lecture de la description qui suit, et à l'aide des figures annexées fournies à titre purement explicatif et non limitatif, dans lesquelles :
La figure 1 illustre de manière schématique, selon une vue en perspective du dessus, un dispositif de rétention de liquide conforme à l'invention selon un mode de réalisation particulier ;
La figure 2 illustre de manière schématique, selon une vue en perspective du dessous, le dispositif de rétention de liquide de la figure 1 ;
La figure 3 illustre de manière schématique, selon une vue en perspective, un agrandi d'un détail d'éléments constitutifs du dispositif de rétention de la figure 1 entourés par des tirets dans cette figure, à la différence que le puits étanche et les éléments en son sein ne sont pas représentés ;
La figure 4 illustre de manière schématique, selon une vue en perspective du dessus, le dispositif de rétention de liquide de la figure 1, à la différence qu'il est illustré dépourvu de paroi supérieure ;
La figure 5 illustre de manière schématique, selon une vue en perspective, un agrandi d'un détail d'éléments constitutifs du dispositif de rétention de la figure 4 entourés par des tirets dans cette figure, à la différence que le puits étanche et les éléments en son sein ne sont pas représentés ;
La figure 6 illustre de manière schématique, selon une vue du dessus, le dispositif de rétention de liquide de la figure 1 ;
La figure 7 illustre de manière schématique une vue en coupe selon un plan A-A du dispositif de rétention des figures 1 et 6 ;
La figure 8 illustre, selon une vue en perspective, un agrandi d'un détail d'éléments constitutifs du dispositif de rétention de la figure 7 entourés par des tirets dans cette figure ;
La figure 9 illustre de manière schématique une vue en coupe selon un plan A-A, d'un ensemble d'éléments constitutifs du dispositif de rétention de la figure 1, en l'occurrence un puits étanche et des éléments au sein de ce dernier, ainsi que d'un rail d'arrimage et d'un plancher intérieur d'un véhicule ;
La figure 10 illustre de manière schématique, selon une vue en perspective, un élément constitutif du dispositif de rétention de la figure 1, en l'occurrence un puits étanche et des éléments au sein de ce dernier ;
La figure 11 illustre de manière schématique, selon une vue en perspective du dessus, un dispositif de rétention de liquide conforme à l'invention selon un autre mode de réalisation particulier ;
La figure 12 illustre de manière schématique, selon une vue en perspective, le dispositif de rétention de liquide de la figure 11 à la différence qu'il est illustré dépourvu de paroi supérieure et présente une portion, coupée par un plan B-B, qui n'apparaît pas ;
La figure 13 illustre de manière schématique, selon une vue en perspective, un agrandi d'un détail d'éléments constitutifs du dispositif de rétention de la figure 12, entouré par des pointillés dans cette figure ;

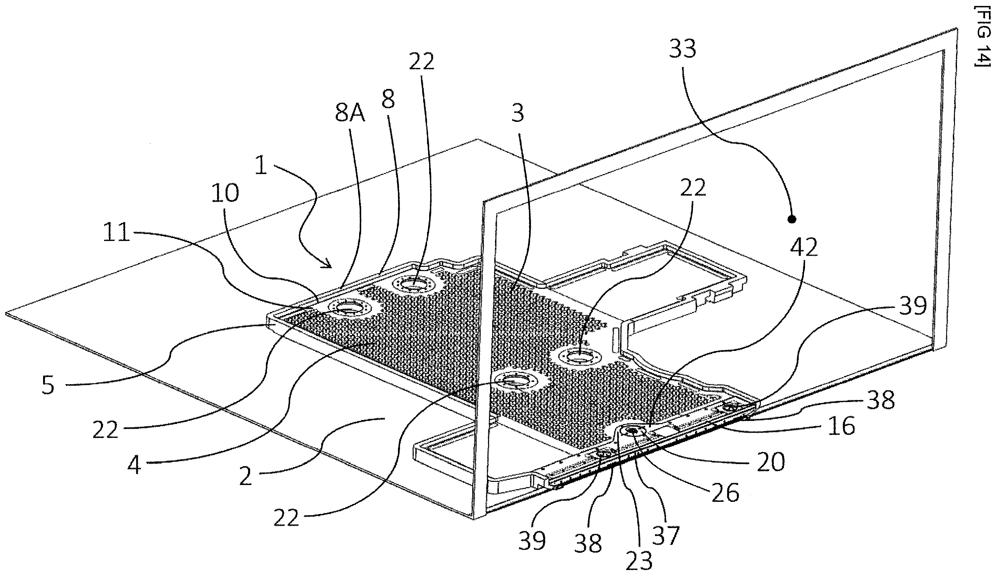

La figure 14 illustre de manière schématique, selon une vue en perspective du dessus, un dispositif de rétention de liquide conforme à l'invention selon un autre mode de réalisation particulier. Le dispositif de rétention de liquide est illustré embarqué sur le plancher intérieur d'un véhicule. Quatre puits étanches ont été omis, de sorte à laisser apparaître quatre lumières traversantes du réservoir de stockage, chacune destinées à recevoir un puits étanche au sein duquel peut être positionné un moyen de fixation pour attacher le dispositif de rétention de liquide au plancher intérieur du véhicule ;
La figure 15 illustre de manière schématique, selon une vue du dessus, le dispositif de rétention de liquide de la figure 14 ;
La figure 16 illustre, selon une vue du dessous, le dispositif de rétention de liquide des figures 14 et 15 ;
La figure 17 illustre, selon une vue tronquée en coupe selon un plan C-C (voir figure 15) une partie du dispositif de rétention de liquide des figures 14 à 16 ;
La figure 18 illustre, selon une vue tronquée en coupe selon un plan D-D (voir figure 15) une partie du dispositif de rétention de liquide des figures 14 à 17.

### MEILLEURE MANIERE DE REALISER L'INVENTION

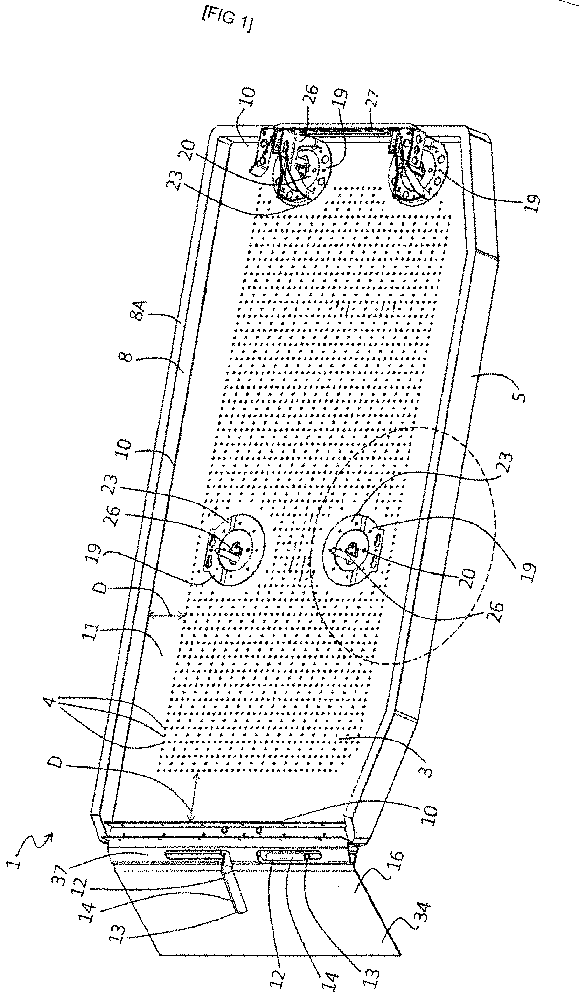

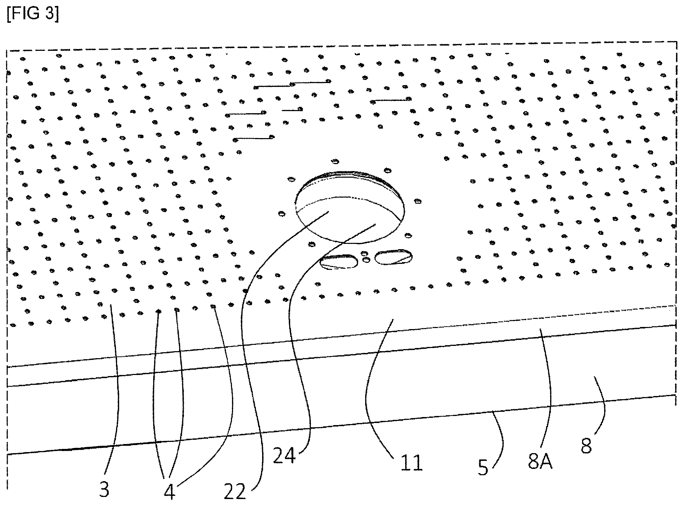

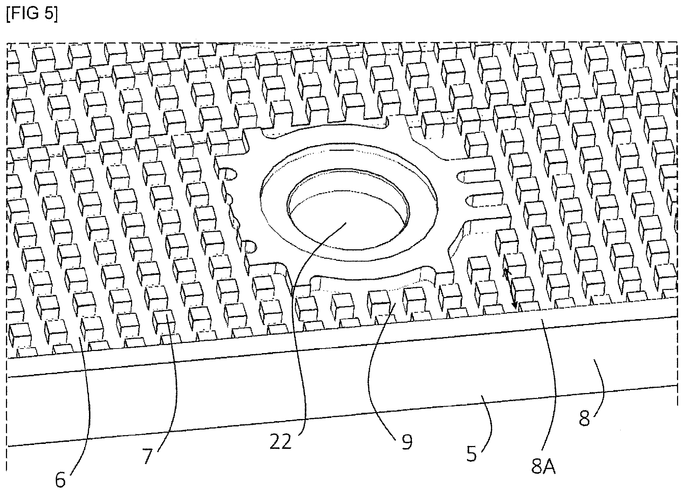

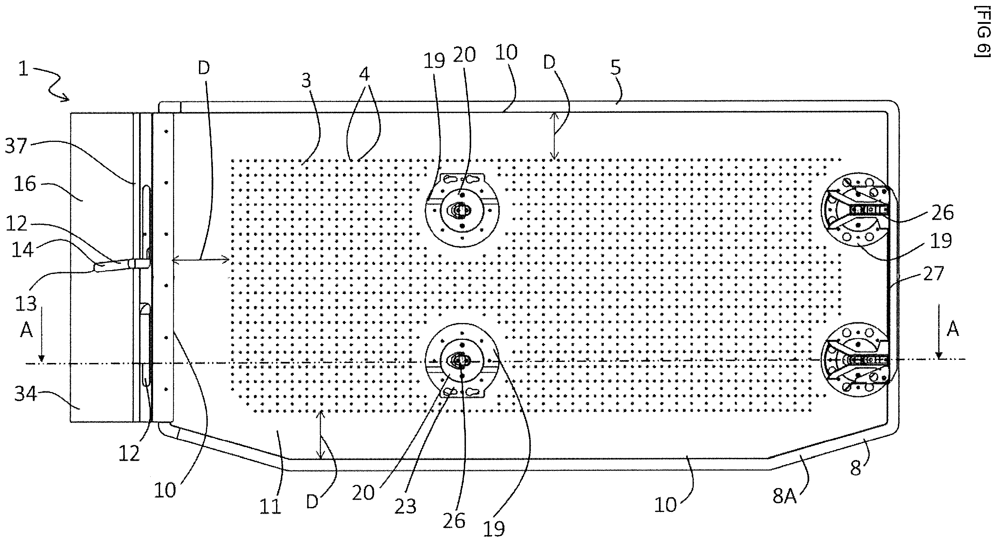

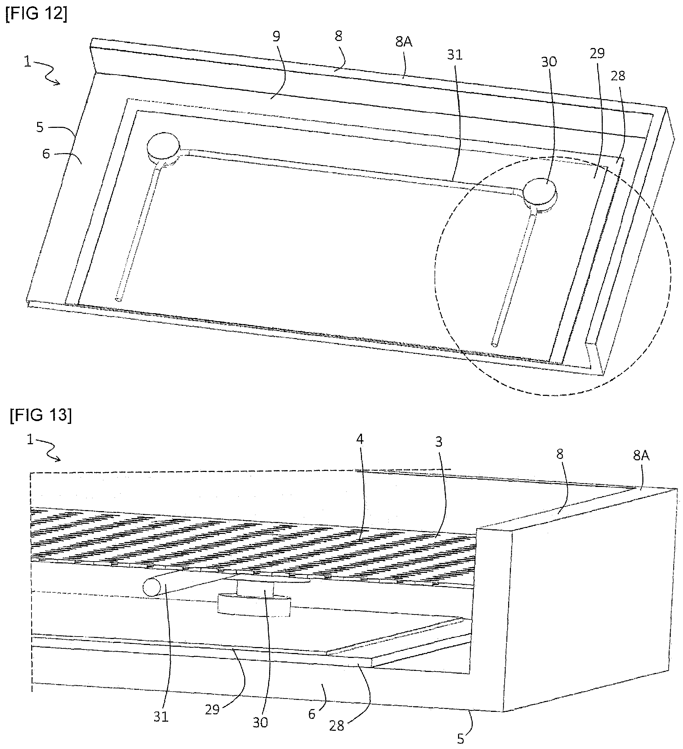

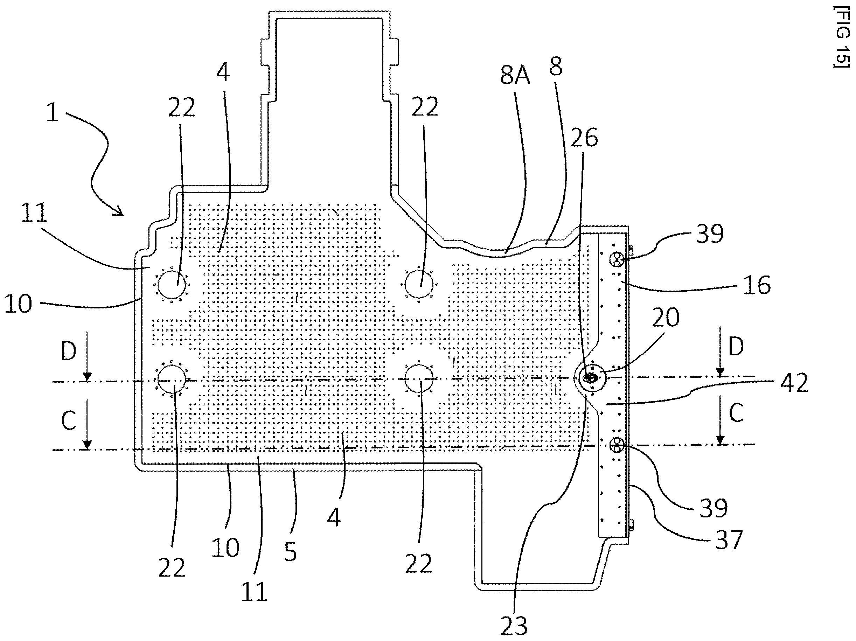

L'invention concerne, selon un premier aspect illustré aux figures, un dispositif de rétention de liquide 1 destiné à être embarqué sur le plancher intérieur 2 d'un véhicule. Le dispositif de rétention de liquide 1 est donc distinct dudit plancher intérieur 2, sur lequel il est destiné à être agencé. Un mode de réalisation particulier du dispositif de rétention de liquide 1 est illustré aux figures 1 à 13, et un autre mode de réalisation particulier est illustré aux figures 14 à 18. Sauf mention contraire dans ce qui suit, les caractéristiques techniques décrites ci-après en lien avec le premier desdits modes de réalisation sont transposables *mutatis mutandis à* l'autre desdits modes de réalisation, et réciproquement, et ce même si certaines desdites caractéristiques ne sont pas nécessairement illustrées aux figures relatives à l'un ou l'autre desdits modes de réalisation. Par souci de simplicité, des références aux dessins communes sont utilisées dans ce qui suit pour designer des éléments identiques ou similaires dans chacun de ces modes de réalisation particuliers.

Ledit véhicule est de préférence un aéronef, plus particulièrement un aérodyne à voilure tournante, et plus particulièrement encore un hélicoptère, par exemple un hélicoptère de sauvetage ou d'évacuation. Alternativement, le véhicule est un avion, ou un véhicule terrestre, tel qu'une ambulance, un camion, un utilitaire, un van, ou encore un navire.

Selon l'invention, le dispositif de rétention de liquide 1 est en outre conçu et configuré pour recueillir un équipement embarqué (non illustré) par ledit véhicule, par exemple un siège ou une civière, notamment lors d'une mission d'évacuation. Plus particulièrement, la mission d'évacuation comprend une opération de récupération d'un individu dans une étendue d'eau, notamment en mer (y compris sur un navire), ou encore dans un lac, une rivière ou un fleuve. La récupération dudit individu peut alternativement s'effectuer sur la terre ferme. L'équipement embarqué comprend par exemple une civière, mais il peut comprendre également un siège passager du véhicule, ou un autre équipement. L'équipement embarqué est en particulier relativement encombrant et lourd, et présente par exemple une plus grande dimension, par exemple une longueur, supérieure ou égale à 100 cm, et de préférence supérieure ou égale à 150 cm. L'équipement embarqué présente une masse supérieure ou égale à 10 kg, de préférence supérieure ou égale à 15 kg, plus préférentiellement supérieure ou égale à 20 kg, voire supérieure ou égale à 60 kg notamment dans le cas où l'équipement embarqué est une civière chargée d'un individu à évacuer. Les dimensions du dispositif de rétention 1 sont de préférence adaptées pour supporter la totalité de l'équipement embarqué, c'est-à-dire que le dispositif de rétention 1 est configuré pour être interposé entre le plancher intérieur 2 du véhicule et l'équipement embarqué. Le dispositif de rétention 1 présente par exemple une plus grande dimension (telle que sa longueur) supérieure ou égale à un mètre. Bien évidemment, le dispositif de rétention de liquide 1 peut être conçu et configuré pour recueillir une pluralité d'équipements embarqués tels que décrits ici (civière, siège passager, caisse de matériel, matériel de soin...).

Selon un mode de réalisation particulier, l'équipement embarqué comprend une civière, qui a par exemple été immergée au cours de la récupération d'un individu en mer (ou autre étendue d'eau). L'individu est donc placé sur la civière, laquelle est ensuite transportée (par exemple héliportée) au sein du véhicule, qui est par exemple un hélicoptère, pour procéder à l'évacuation de l'individu secouru. Dans ce dernier cas particulier ou dans d'autres situations, le liquide comprend par exemple de l'eau, mais il peut également comprendre une autre matière liquide. L'équipement embarqué peut par ailleurs comprendre un ou plusieurs sièges passagers, sur lesquels des sauveteurs, également mouillés après la récupération de l'individu en mer, peuvent s'assoir. Le dispositif de rétention de liquide 1 est ainsi avantageusement conçu pour capter et retenir le liquide (en particulier de l'eau) qui se déverse de la civière mouillée et/ou du ou des sièges passagers, et/ou de tout autre équipement trempé lors de la récupération et l'évacuation de l'individu chargé sur la civière. Cette rétention de liquide, en particulier de l'eau abondante et salée, permet de diminuer l'inconfort des sauveteurs et de l'individu évacué tout en prévenant d'éventuelles dégradations de composants sensibles (notamment électriques et électroniques) du véhicule (et en particulier d'un hélicoptère) ou embarqués par ce dernier. L'équipement embarqué peut aussi être une caisse de matériel, ou tout autre type d'équipement embarqué.

Par exemple, le liquide comprend ou est formé par de l'eau (notamment de l'eau de mer), de l'huile, un hydrocarbure, du sang, un détergent, un autre fluide sous forme liquide, ou un mélange de plusieurs de ces substances. Le liquide peut éventuellement être pollué et/ou contaminé, et à ce titre doit d'autant plus être stocké de manière contrôlée par le dispositif de rétention 1.

Selon l'invention, le dispositif de rétention de liquide 1 comprend au moins :
- une paroi supérieure 3 conçue et configurée pour supporter ledit équipement, ladite paroi supérieure 3 étant pourvue d'une pluralité d'orifices traversants 4, et
- un réservoir de stockage de liquide 5 agencé au moins en partie en-dessous de ladite paroi supérieure 3, ledit réservoir de stockage 5 étant conçu et configuré pour recueillir le liquide passant à travers lesdits orifices traversants 4.

Ladite paroi supérieure 3 est ainsi avantageusement destinée à recevoir la totalité du poids dudit équipement embarqué, en particulier la totalité du poids d'une civière, cette dernière étant de préférence mouillée, par exemple d'eau de mer. Ladite paroi supérieure 3 présente avantageusement une surface globalement plane. Ledit réservoir de stockage 5 présente avantageusement une étanchéité au liquide, c'est-à-dire qu'il comprend de préférence des parois conçues pour être imperméables au liquide. Ledit réservoir de stockage 5 est avantageusement conçu pour que son étanchéité puisse être contrôlée, c'est-à-dire qu'il peut exister un moyen de vidage du liquide comprenant par exemple un trou de vidage réalisé dans l'une des parois dudit réservoir de stockage 5, comme on le verra plus tard.

De manière avantageuse, la paroi supérieure 3 est formée par au moins une plaque pourvue desdits orifices traversants 4, ceux-ci traversant ladite plaque dans son épaisseur. Lesdits orifices traversants 4 sont par exemple, comme illustré aux figures, de forme circulaire, et constituent selon un mode de réalisation particulier des perforations. Ledit réservoir de stockage de liquide 5 forme avantageusement un bac, lequel présente de préférence une tenue mécanique propre, c'est-à-dire que le réservoir de stockage de liquide 5 présente de préférence une certaine rigidité (mais également éventuellement une certaine flexibilité) et surtout n'est pas flasque. De façon avantageuse, la paroi supérieure 3 est positionnée au moins en partie, et de préférence en totalité, au sein dudit réservoir de stockage 5 (et donc au sein dudit bac).

Lesdits orifices traversants 4 sont de préférence relativement petits et discrets, et présentent par exemple un diamètre inférieur à 2 cm, de préférence inférieur à 1, 5 cm, et par exemple un diamètre supérieur à 0,2 mm. La paroi supérieure 3 présente par exemple une largeur supérieure ou égale à 40 cm, de préférence supérieure ou égale à 50 cm, et une longueur supérieure ou égale à 100 cm, de préférence supérieure ou égale à 150 cm. La paroi supérieure présente avantageusement une épaisseur inférieure à 3 cm, de préférence inférieure à 2 cm, par exemple comprise en 0,5 et 1,5 cm. La paroi supérieure 3 étant de préférence placée au sein dudit réservoir de stockage 5, ce dernier présente de manière avantageuse des largeur et longueur sensiblement conjuguées et/ou similaires (dans une marge d'erreur de 15% par exemples) à celles de la paroi supérieure 3. Lesdits orifices traversants 4 sont de préférence répartis de manière sensiblement régulière sur ladite paroi supérieure 3, et de préférence sur au moins 50% de ladite paroi supérieure 3, plus avantageusement au moins 70% de ladite paroi supérieure 3, par exemple environ 80% (+/- 5%) de ladite paroi supérieure 3.

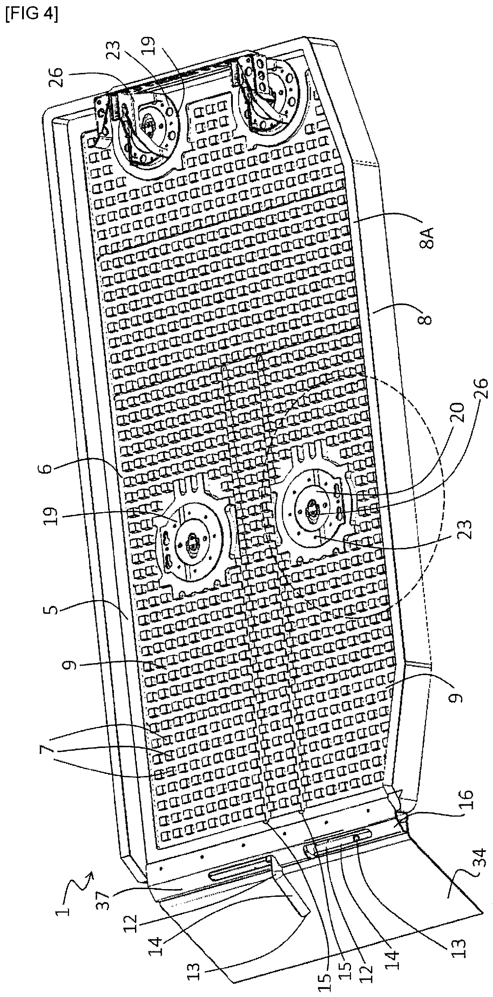

Ainsi, comme illustré aux figures, le réservoir de stockage 5 comprend avantageusement au moins un fond 6, à partir duquel s'élève, dans le mode de réalisation particulier illustré notamment aux figures 4, 5, 7 et 8, une pluralité de saillies 7 distinctes et distantes les unes des autres sur lesquelles repose ladite paroi supérieure 3. Ainsi, chaque saillie 7 forme avantageusement une protubérance s'élevant à partir dudit fond 6 et sur laquelle ladite paroi supérieure 3 vient en contact. Lesdites saillies 7 présentent, dans le mode de réalisation illustré aux figures 4, 5, 7 et 8, une section transversale (horizontale) sensiblement rectangulaire ou carrée, mais leur section transversale pourrait aussi être ronde, circulaire elliptique, triangulaire, ou toute autre forme appropriée. Ainsi, lesdites saillies 7 présentent par exemple une forme globalement pavée ou cubique, pyramidale, ou cylindrique. Les saillies 7 permettent en particulier de gêner ou de bloquer le déversement du liquide hors dudit réservoir de stockage 5 lors d'un mouvement du véhicule, par exemple lors d'une accélération et/ou lors d'un changement d'inclinaison de ce dernier.

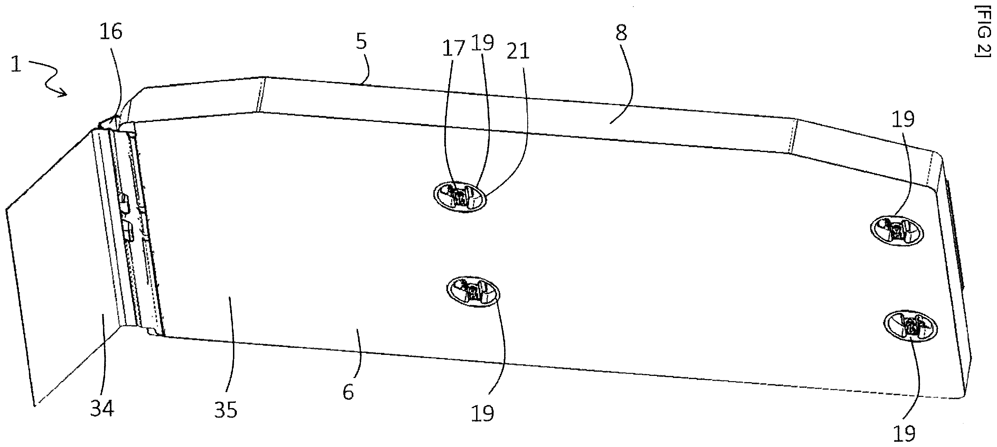

Ledit fond 6 présente par exemple la forme d'une plaque, comme illustré notamment à la figure 2. Ledit fond 6 est en particulier destiné à reposer sur le plancher intérieur 2 du véhicule. De manière avantageuse, ledit réservoir de stockage 5 comprend au moins un bord de réservoir 8, ledit bord de réservoir 8 étant conçu pour retenir le liquide au sein dudit réservoir de stockage 5. Bien entendu, ledit bord de réservoir 8 s'élève préférentiellement depuis la périphérie et/ou autour dudit fond 6. Plus précisément, ledit bord de réservoir 8 est relié audit fond 6, et peut être venu de matière avec ce dernier. Le fond 6 et le bord de réservoir 8 forment en particulier un bac (de préférence celui mentionné ci-avant) ouvert sur l'extérieur vers le haut, l'ouverture dudit bac étant de préférence conçue pour recevoir la paroi supérieure 3, de préférence de manière amovible. Le bord de réservoir 8 s'élève de préférence autour de la périphérie de ladite paroi supérieure 3, de préférence contre et relié à cette dernière. Le bord de réservoir 8 s'élève (à la verticale), de préférence à plus de 5 cm, et plus préférentiellement à plus de 10 cm. Comme illustré aux figures, le bord de réservoir 8 s'élève ainsi avantageusement jusqu'à un rebord 8A agencé à une altitude supérieure à une altitude respective de la paroi supérieure 3, de sorte à éviter que du liquide présent sur la paroi supérieure 3 ne s'écoule par-dessus le bord de réservoir 8. Le réservoir de stockage 5 est donc conçu de manière avantageuse pour stocker le liquide au moins à l'aide dudit bord de réservoir 8, et dudit fond 6. Ladite paroi supérieure 3 est avantageusement configurée pour recevoir l'équipement embarqué, laisser passer le liquide au sein dudit réservoir de stockage 5 grâce auxdits orifices traversants 4, et retenir ensuite le liquide au sein dudit réservoir de stockage 5 en formant une sorte de couvercle sur et/ou au sein de ce dernier.

De préférence, ledit réservoir de stockage 5 présente, entre lesdites saillies 7, des interstices de stockage 9 destinés à recueillir le liquide passant à travers lesdits orifices traversants 4. Lesdites saillies 7 sont de préférence réparties sur plus de 60% dudit fond 6, et plus préférentiellement plus de 80% dudit fond 6, et plus préférentiellement encore plus de 90% dudit fond 6. Lesdits interstices de stockage 9 présentent donc avantageusement une répartition similaire (et conjuguée) à celle desdites saillies 7. De manière préférentielle, lesdits interstices de stockage 9 communiquent (fluidiquement) les uns avec les autres, de préférence de manière à former un espace de stockage formé d'une pluralité de canaux en communication fluidique, entre ledit fond 6 et ladite paroi supérieure 3. Lesdits interstices de stockage 9 sont bien évidemment avantageusement situés entre ladite paroi supérieure 3 et ledit fond 6. Ces interstices de stockage 9 sont de préférence destinés à recueillir le liquide s'écoulant depuis lesdits orifices traversants 4, tandis que lesdites saillies 7 limitent les déplacements de liquide au sein du dispositif de rétention 1, ce qui limite voire empêche le déversement accidentel de liquide hors dudit bac de rétention 1, notamment lors de mouvements du véhicule, par exemple un changement d'assiette brusque d'un hélicoptère.

De manière avantageuse, le dispositif de rétention 1 est configuré pour que lesdits orifices traversants 4 se trouvent majoritairement, de préférence en quasi-totalité ou en totalité, en regard desdits interstices de stockage 9. Lesdites saillies 7 ne sont de préférence majoritairement, plus préférentiellement en quasi-totalité ou en totalité, pas en regard desdits orifices traversants 4. Une telle configuration facilite l'écoulement du liquide de l'équipement embarqué jusqu'au réservoir de stockage 5 (et plus précisément dans lesdits interstices de stockage 9) via lesdits orifices traversants 4.

Avantageusement, ladite paroi supérieure 3 est destinée à s'étendre sensiblement à l'horizontale. Ledit fond 6 est également préférentiellement destiné à s'étendre sensiblement à l'horizontale. Ledit bord de réservoir 8 est de préférence destiné à s'étendre à la verticale, et il s'étend par ailleurs avantageusement sensiblement perpendiculairement audit fond 6, bien qu'il soit également possible que ledit bord de réservoir 8 soit destiné à s'étendre sensiblement à l'oblique, et qu'il s'étende à l'oblique par rapport audit fond 6. Le dispositif de rétention 1 est de préférence configuré pour que ledit fond 6 et ladite paroi supérieure 3 s'étendent sensiblement parallèlement l'un à l'autre. De manière avantageuse, ledit fond 6 est destiné à reposer contre le plancher intérieur 2 du véhicule, sensiblement parallèlement à ce dernier. On peut éventuellement considérer que la paroi supérieure 3 constitue la partie supérieure du réservoir 5, tandis que le fond 6 en constitue la partie inférieure, et le bord de réservoir 8 la partie latérale. Le bord de réservoir 8 dépasse avantageusement au-dessus de la paroi supérieure 3, afin de former une butée de sécurité pour l'équipement embarqué lorsqu'il est chargé sur la paroi supérieure 3 et/ou pour mieux retenir le liquide au sein du dispositif de rétention 1 (des bords plus hauts retiennent évidemment plus de liquide). Les descriptions spatiales préférentielles (en ce qui concerne la verticale et l'horizontale notamment) qui précèdent et qui suivent, partent du principe que par convention, le plancher intérieur 2 du véhicule est sensiblement à l'horizontale, bien que cela ne soit évidemment pas toujours vrai au regard des variations d'assiette fréquentes dudit véhicule ; il est ainsi possible de considérer que, par convention, le plancher intérieur 2 du véhicule est à l'horizontale (et/ou définit l'horizontale).

De préférence, ladite paroi supérieure 3 présente des bords de paroi 10 reliés audit réservoir de stockage 5, soit de manière permanente (par exemple par soudage ultrason, collage et/ou vissage), soit de manière amovible. Plus précisément, lesdits bords de paroi 10 sont avantageusement reliés au bord de réservoir 8. Comme illustré notamment à la figure 1, lesdits bords de paroi 10 comprennent par exemple quatre côtés périphériques, dont deux grands côtés (sensiblement parallèles) et deux petits côtés (sensiblement parallèles), les grands côtés étant sensiblement perpendiculaires avec les petits côtés. Le bord de réservoir 8 borde avantageusement au moins en partie lesdits bords de paroi 10. Bien évidemment, d'autres conformations de la paroi supérieure 3 sont envisageables, telle que celle par exemple de la paroi supérieure 3 du mode de réalisation des figures 14 à 18.

De manière générale, un assemblage amovible de la paroi supérieure 3 au réservoir de stockage 5, tel qu'envisagé en variante ci-dessus (que ce soit par l'intermédiaire ou non des bords de paroi 10 de la paroi supérieure 3) offre notamment la possibilité d'un remplacement de la paroi supérieure 3 si nécessaire, par exemple en cas d'usure, d'endommagement, de la paroi supérieure 3 ou encore pour remplacer une paroi supérieure 3 donnée par une autre paroi supérieure 3 en un matériau différent et / ou qui présenterait un aspect de surface différent (par exemple antidérapant), plus adapté à un usage particulier que l'on souhaite faire du dispositif de rétention de liquide 1. Le réservoir de stockage 5 peut, quant à lui, rester en position sur le plancher intérieur 2 du véhicule. En outre, le caractère amovible de la paroi supérieure 3 permet d'offrir un accès à l'intérieur du réservoir de stockage 5, à des fins notamment de maintenance et de nettoyage de ce dernier.

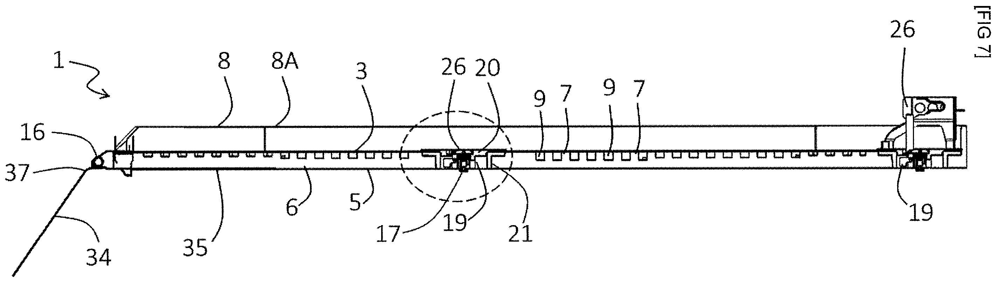

De manière préférentielle, comme cela est illustré à la figure 7, lesdits interstices de stockage 9 présentent des profondeurs variables. En particulier, pour une dimension (horizontale) donnée, une pluralité d'interstices de stockage 9 situés à proximité des bords de paroi 10 présentent une profondeur plus faible qu'une pluralité d'autres interstices de stockage 9 situés plus loin desdits bords de paroi 10. Une telle configuration permet de conférer une meilleure tenue mécanique au dispositif de rétention de liquide 1, et surtout permet de retenir une proportion importante, et notamment la majorité, dudit liquide dans une zone centrale dudit réservoir de stockage 5, ce qui limite considérablement le risque de projection non désirée de liquide hors dudit dispositif de rétention 1 (et donc sur le plancher intérieur 2) lors d'un mouvement brusque ou d'une inclinaison soudaine du véhicule. La profondeur est de préférence mesurée au droit de la paroi supérieure 3.

De manière particulièrement avantageuse, ladite paroi supérieure 3 présente une surface 11 dépourvue d'orifices traversants 4 s'étendant depuis lesdits bords de paroi 10. Ladite surface 11 dépourvue d'orifices traversants 4 forme avantageusement une portion périphérique 11 de ladite paroi supérieure 3, ladite portion périphérique 11 faisant de préférence (tout) le tour de ladite paroi supérieure 3. Ainsi, ladite surface 11 dépourvue d'orifices traversants 4 s'étend avantageusement au droit de chaque bord de paroi 10 sur une distance de bord D respective depuis ledit bord de paroi 10. Ladite distance de bord D est par exemple d'au moins 5 cm, de préférence au moins 7 cm, par exemple environ 10 cm (+/- 1 cm). Selon un mode de réalisation avantageux, ladite distance de bord D est supérieure ou égale à 1/10^{e}, de préférence supérieure ou égale à 1/8^{e}, de la dimension de la paroi supérieure 3 considérée au droit dudit bord de paroi 10, par exemple la largeur ou la longueur de ladite paroi supérieure 3. Par exemple, au droit de chaque bord de paroi 10 de la largeur de ladite paroi supérieure 3, ladite surface 11 dépourvue d'orifices traversants 4 s'étend sur au moins une distance de bord D qui fait au moins 1/6^{e} de la largeur paroi supérieure 3, en partant depuis le bord de paroi 10.

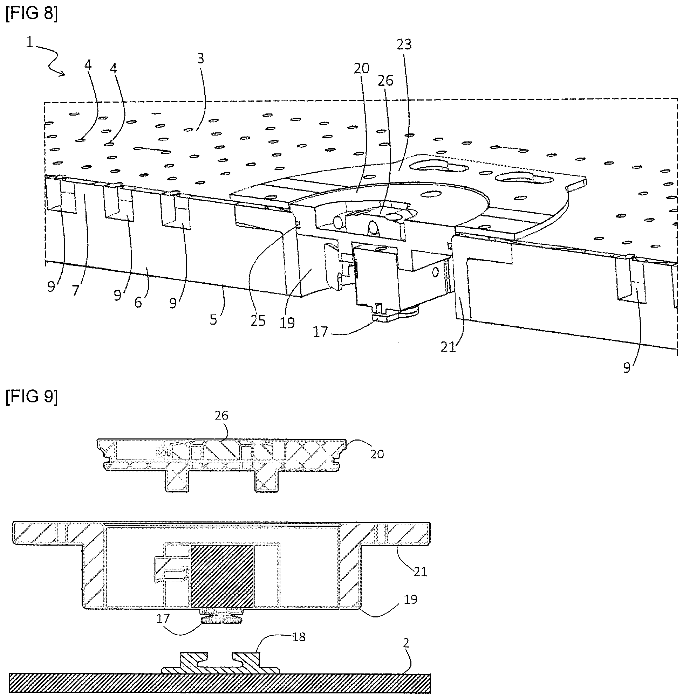

De préférence, ledit réservoir de stockage 5 est réalisé au moins en partie en mousse à cellules fermées. De manière particulièrement avantageuse, lesdites saillies 7 (qui font donc partie du réservoir de stockage 5) sont réalisées en ladite mousse. Ledit fond 6 peut également être réalisé au moins en partie en ladite mousse. Ladite mousse à cellules fermées présente préférentiellement une masse volumique comprise entre 30 et 120 kg/m³, de préférence comprise entre 35 et 80 kg/m³, par exemple environ égale à 47 kg/m³ (+/-3 kg/m³). La paroi supérieure 3, qui repose avantageusement sur les saillies 7, comme cela est visible aux figures 7 et 8, est donc préférentiellement conçue pour s'appuyer contre ladite mousse, l'ensemble des saillies 7 formées de ladite mousse présentant un appui particulièrement stable pour ladite paroi supérieure 3, ainsi qu'un éventuel amorti qui est particulièrement appréciable lors du dépôt de l'équipement sur la paroi supérieure 3, notamment lorsque cet équipement est une civière trempée transportant un individu secouru éventuellement blessé ou souffrant qu'il convient de ménager. Ledit réservoir de stockage 5 peut être réalisé au moins en partie en polymère (une mousse à cellules fermées telle que mentionnée ci-avant par exemple, ou autre) tel qu'un polyester, le polymère présentant de préférence une bonne résistance et une tenue mécanique propre dès lors qu'il présente une certaine épaisseur (un cm ou plus par exemple). De manière particulièrement avantageuse, lesdites saillies 7 (qui font donc partie du réservoir de stockage 5) sont réalisées en ledit polymère (ou en plusieurs polymères). Une telle configuration, avec la mousse et/ou le polymère, confère au dispositif de rétention 1 une excellente capacité en stockage de liquide, une bonne résistance mécanique, ainsi qu'une masse réduite. Ledit réservoir de stockage 5 peut alternativement ou en complément être réalisé au moins en partie en métal, par exemple en aluminium et/ou en acier. Il est préférable que le dispositif de rétention 1 reste assez léger, surtout lorsqu'il est fixé au plancher intérieur 2 d'un aéronef.

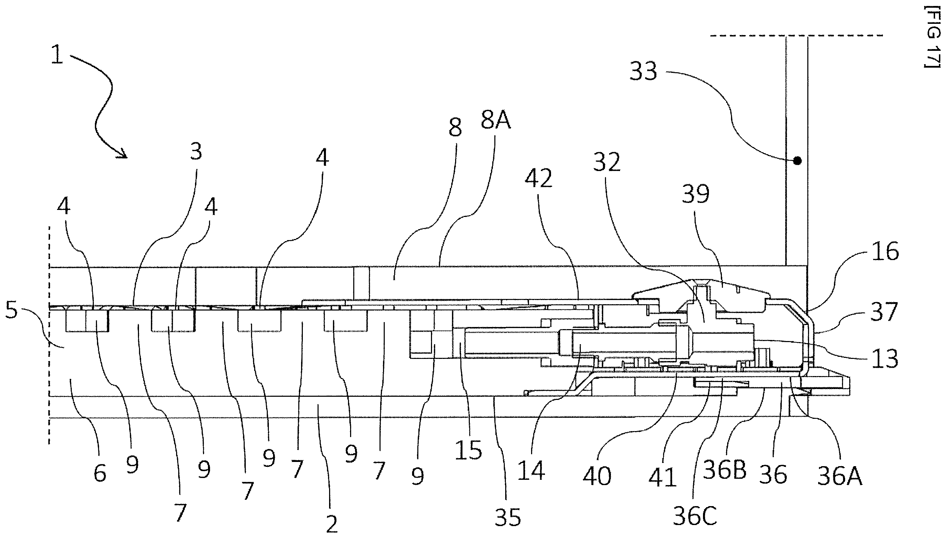

De préférence, le réservoir de stockage 5 comprend au moins un moyen de vidage 12, lequel comprend au moins un orifice 13 (ou orifice de vidage) débouchant sur l'extérieur (du réservoir de stockage 5), ainsi qu'un organe d'ouverture / fermeture pour commander sélectivement l'écoulement du liquide recueilli par le réservoir de stockage 5 hors de ce dernier, par l'intermédiaire dudit orifice 13. Selon une variante, mise en œuvre dans le mode de réalisation des figures 1 à 13, l'organe d'ouverture / fermeture peut comprendre un moyen de bouchage amovible (non illustré) dudit orifice débouchant 13. Ledit orifice 13 débouchant est configuré pour, lorsqu'il est débouché ou à tout le moins lorsqu'il est mis en communication fluidique avec l'intérieur du réservoir de stockage 5 après manipulation de l'organe d'ouverture / fermeture, laisser s'écouler le liquide recueilli par le réservoir de stockage 5 hors de ce dernier. Le moyen de vidage 12 comprend par exemple, comme illustré notamment à la figure 1, un conduit 14 présentant une première extrémité 15 débouchant à l'intérieur du réservoir de stockage 5 et une deuxième extrémité 13 opposée à la première extrémité 15 et débouchant à l'extérieur du réservoir, la deuxième extrémité 13 formant par exemple l'orifice débouchant 13, comme illustré à la figure 4. Alternativement, la première extrémité 15 forme l'orifice débouchant 13, mais on pourrait aussi considérer que le conduit 14 lui-même forme l'orifice débouchant 13. Selon une autre variante, mise en œuvre dans le mode de réalisation des figures 14 à 18, l'organe d'ouverture / fermeture peut comprendre un robinet-vanne 32. Dans cette variante, et comme illustré en exemple à la figure 17, le moyen de vidage 12 peut typiquement comprendre un conduit 14 comportant une première extrémité 15 débouchant à l'intérieur du réservoir de stockage 5 et une deuxième extrémité opposée reliée à une entrée du robinet-vanne 32, une sortie du robinet-vanne 32 formant alors avantageusement l'orifice 13 débouchant.

La première extrémité 15 est par exemple pratiquée ou agencée dans le fond 6 et/ou le bord de réservoir 8. Une telle configuration permet de vider le réservoir de stockage 5 de son liquide dès que possible, par exemple pendant le déplacement du véhicule, et en particulier lors de l'évacuation d'un individu récupéré (par exemple en mer) et placé sur une civière (qui constitue alors au moins en partie l'équipement). Bien entendu, le moyen de vidage 12 peut comprendre plusieurs conduits 14 (par exemple deux) tel que celui susmentionné.

De préférence, le dispositif de rétention de liquide 1 comprend un longeron de protection 16 (ou bordure de protection) solidarisé à un bord (ou à un coté) du réservoir de stockage 5 (ou à tout le moins assemblé audit bord), de manière à protéger ce dernier, en particulier d'un écrasement provoqué par ledit équipement lorsque celui-ci est placé sur le dispositif de rétention 1. En effet, l'équipement est souvent « *jeté* » sur le dispositif de rétention 1 ou glissé violemment dessus, notamment lors de l'accostage de l'équipement sur la paroi supérieure 3, qui s'effectue souvent sans précaution en raison de circonstances particulières (urgence lors d'une mission d'évacuation de personne, assiette d'hélicoptère instable, lourdeur de l'équipement notamment lorsqu'il comprend une civière embarquant un individu, mise en place d'un siège passager lourd et encombrant, etc.). Avantageusement, le dispositif de rétention de liquide 1 est destiné à être embarqué dans le véhicule avec le longeron de protection 16 orienté en regard d'une ouverture 33 du véhicule, comme illustré en exemple à la figure 14. Ledit longeron de protection 16 forme ainsi avantageusement un « pare-chocs » ou une marche de protection du bord du réservoir de stockage 5, contre laquelle l'équipement à embarquer pourra venir en contact, et éventuellement en appui, lorsque ledit équipement est introduit dans le véhicule par ladite ouverture 33 de ce dernier. Il est par ailleurs envisageable de prévoir que le longeron de protection 16 suit sensiblement tout le contour du réservoir de stockage 5, et non seulement une portion de ce dernier comme dans les modes de réalisation illustrés aux figures.

De préférence, ledit longeron de protection 16 est réalisé en métal (dont l'aluminium, l'acier, ou un alliage), en polymère, et/ou en bois. Le matériau formant ledit longeron de protection est préférentiellement solide, et présente notamment une excellente résistance à l'écrasement, notamment une meilleure résistance à l'écrasement que le reste du dispositif de rétention 1, et en particulier une meilleure résistance à l'écrasement que ladite mousse. Selon un exemple particulier illustré notamment à la figure 1, ledit longeron de protection 16 comprend une portion 34 en forme de plaque, de préférence configurée pour être posée sur le plancher intérieur 2 du véhicule, et/ou pour être positionnée au niveau d'une ouverture du véhicule. Avantageusement, ladite portion en forme de plaque peut former une rampe ou une bavette 34, par exemple pour faciliter l'embarquement de l'équipement sur le dispositif de rétention de liquide 1 depuis l'extérieur du véhicule et/ou pour guider l'écoulement du liquide hors du réservoir de stockage 5 par l'intermédiaire de l'orifice 13 débouchant du moyen de vidage 12, par exemple vers l'extérieur du véhicule. Ledit moyen de vidage 12 est par exemple positionné au niveau d'une portion dudit longeron de protection 16, et notamment sur ou dans cette dernière. Une telle configuration permet de cacher au moins en partie, et/ou de ranger, ledit moyen de vidage 12, et en particulier ledit conduit 14.

Selon une variante de l'invention, le dispositif de rétention de liquide 1 comprend au moins un moyen de fixation 17 configuré pour attacher, de préférence de manière réversible, le dispositif de rétention 1 au plancher intérieur 2 du véhicule, et en particulier à un rail d'arrimage 18 équipant ledit plancher intérieur 2. La mise en œuvre d'un tel moyen de fixation 17 permet de limiter, et de préférence d'interdire totalement, un déplacement relatif du dispositif de rétention de liquide 1 et du plancher intérieur 2 du véhicule, en particulier sous l'effet de mouvements (tel que notamment un changement d'inclinaison et/ou une accélération) du véhicule en déplacement. Cela permet notamment une mise en œuvre pratique, fiable et sécurisée du dispositif de rétention de liquide 1. Le dispositif de fixation 17 comprend par exemple un pion présentant une tête conçue pour venir s'engager puis se verrouiller, de manière réversible, dans ledit rail d'arrimage 18, un tel verrouillage étant connu en tant que tel. Le rail d'arrimage 18 est de préférence solidarisé au plancher intérieur 2 du véhicule, par exemple à l'aide de vis ou de soudures. Alternativement, le rail d'arrimage 18 peut être directement ménagé dans le plancher intérieur 2 du véhicule.

De manière préférentielle, le dispositif de rétention de liquide 1 comprend au moins un puits 19 étanche au liquide, qui traverse ladite paroi supérieure 3 et ledit réservoir de stockage 5. Avantageusement, ledit moyen de fixation 17 est positionné au sein dudit puits étanche 19. Cela permet avantageusement de fixer le dispositif de rétention de liquide 1 au plancher intérieur 2 du véhicule, à travers le réservoir de stockage 5, sans nuire à l'étanchéité de ce dernier. Cela permet en outre une fixation particulièrement facile, pratique et efficace du dispositif de rétention de liquide 1 au plancher intérieur 2 du véhicule, en particulier à un rail d'arrimage 18 équipant ledit plancher intérieur 2, et ce avantageusement indépendamment des dimensions et conformations du dispositif de rétention de liquide 1. Il est notamment ainsi possible de concevoir un dispositif de rétention de liquide 1, dimensionné pour recouvrir sensiblement toute la surface du plancher intérieur 2 du véhicule afin de protéger au mieux ledit plancher intérieur 2, et qui peut toutefois être facilement fixé à un rail d'arrimage 18 du plancher intérieur 2. Avantageusement, le dispositif de rétention de liquide 1 peut comprendre une pluralité de puits 19 étanches, lesquels sont agencés les uns par rapport aux autres selon un entraxe correspondant à un entraxe respectif d'une pluralité de rails d'arrimage 18 que peut comprendre le plancher intérieur 2.

Le dispositif de rétention de liquide 1 comprend en outre avantageusement un bouchon amovible 20 configuré pour boucher de manière étanche au liquide ledit puits étanche 19, ledit bouchon 20 étant configuré pour être rapporté dans et/ou sur ledit puits étanche 19 depuis le côté extérieur de la paroi supérieure 3. Le puits étanche 19 comprend par exemple au moins un premier flasque 21 en forme de collerette insérée dans une première lumière traversante 22 du réservoir de stockage 5, ladite première lumière traversante 22 ne communiquant pas avec lesdits interstices de stockage 9. Le puits étanche 19 comprend en particulier un deuxième flasque 23, de manière à ce que la paroi supérieure 3 soit pincée entre lesdits premier et deuxième flasques 21, 23, ce pincement étant réalisé autour d'une deuxième lumière traversante 24 de la paroi supérieure 3. Le deuxième flasque 23 peut être en forme d'anneau (plat) par exemple. Lesdites première et deuxième lumières traversantes 22, 24 sont bien évidemment avantageusement en correspondance. Un tel agencement est notamment illustré à la figure 8. De manière avantageuse, le bouchon 20 est configuré pour être fixé au moins en partie dans ledit puits étanche 19, avantageusement de manière amovible, de préférence du côté de ledit deuxième flasque 23 (c'est-à-dire depuis la face extérieure de la paroi supérieure 3, et non depuis la face extérieure du fond 6). Le bouchon 20 comprend par exemple un troisième flasque en forme de disque ainsi qu'un joint torique 25 entourant ledit troisième flasque, ledit joint torique 25 étant conçu pour assurer l'étanchéité au liquide entre ledit troisième flasque et ledit première flasque 21 (et plus généralement entre le bouchon 20 et le puits étanche 19). Ledit bouchon 20 isole préférentiellement ledit moyen de fixation 17 au sein dudit puits étanche 19 vis-à-vis du dessus du dispositif de rétention 1. Ledit bouchon 20 est préférentiellement configuré pour s'attacher de manière amovible audit moyen de fixation 17 au-dessus de ce dernier. Une telle configuration permet en particulier d'éviter que le moyen de fixation 17 et/ou le plancher intérieur 2 soi(en)t mouillé(s) par ledit liquide. Le puits étanche 19 est avantageusement étanche au liquide au niveau de ses bords latéraux, mais c'est de préférence le bouchon 20 qui complète l'étanchéité dudit puits étanche 19 par exemple au niveau d'une extrémité débouchante de ce dernier. Bien évidemment, le dispositif de rétention 1 peut comprendre plusieurs puits étanches 19 tels que celui décrit ci-avant, et en particulier au moins quatre puits étanches 19. Cela permet d'envisager une fixation du dispositif de rétention de liquide 1 au plancher intérieur 2 du véhicule en plusieurs points, par l'intermédiaire d'une pluralité de moyens de fixation 17, chacun positionnés au sein d'un desdits puits étanches 19. Il est également possible de prévoir que le puits étanche 19, ou l'un au moins des puits étanches 19, ne comprend pas de moyen de fixation 17 en son sein, mais est destiné à servir de logement de rangement, pour du matériel d'intervention par exemple.

Selon une autre variante de l'invention, le dispositif de rétention de liquide 1 comprend, en plus dudit moyen de fixation 17 ou à la place de ce dernier, au moins un moyen d'attache 26 configuré pour attacher, de préférence de manière réversible, ledit dispositif de rétention 1 audit équipement embarqué. En d'autres termes, le dispositif de rétention de liquide 1 comprend un moyen d'attache 26 configuré pour attacher, au moins temporairement, l'équipement embarqué au dispositif de rétention de liquide 1, et limiter ainsi (sinon empêcher totalement) le risque d'un déplacement relatif de l'équipement embarqué et du dispositif de rétention de liquide 1, en particulier sous l'effet de mouvements (tel que notamment un changement d'inclinaison et/ou une accélération) du véhicule en déplacement. Ledit moyen d'attache 26 permet donc avantageusement de sécuriser l'équipement embarqué en position sur la paroi supérieure 3 du dispositif de rétention de liquide 1, de sorte notamment à éviter l'égouttement de liquide hors du dispositif de rétention de liquide 1, typiquement sur le plancher intérieur 2 du véhicule. Avantageusement, ledit moyen d'attache 26 est distinct des orifices traversants 4 de la paroi supérieure 3, et de ladite paroi supérieure 3, de sorte notamment que l'ensemble des orifices traversants 4 reste avantageusement libre de permettre l'écoulement de liquide vers le réservoir de stockage 5. Selon un mode de réalisation particulier, illustré aux figures 1 à 10, ledit moyen d'attache 26 est positionné au moins en partie au sein dudit puits étanche 19 ou sur ce dernier. Ledit moyen d'attache 26 est préférentiellement conçu pour être attaché audit puits étanche 19, et ce de préférence de manière réversible. Selon un mode de réalisation particulier, compatible avec le précédent, ledit bouchon 20 embarque ledit moyen d'attache 26. Selon autre un mode de réalisation particulier, également compatible avec les précédents, le moyen d'attache 26 est configuré pour être fixé audit puits étanche 19, et en particulier pour être fixé audit deuxième flasque 23, et éventuellement sur ce dernier. Ledit moyen d'attache 26 peut éventuellement comprendre une barre de fixation 27 reliant deux puits étanches 19, ladite barre de fixation 27 étant par exemple configurée pour recevoir l'équipement, notamment une civière. De préférence, le dispositif de rétention de liquide 1 comprend un dispositif traversant à la fois ladite paroi supérieure 3 et ledit réservoir de stockage 5, ledit dispositif traversant formant à la fois ledit moyen de fixation 17 et ledit bouchon 20, ainsi qu'éventuellement ledit moyen d'attache 26.

En résumé, de manière avantageuse, le moyen de fixation 17 se fixe (de manière amovible) au rail d'arrimage 18 lui-même fixé (à demeure) au plancher 2, le moyen de fixation 17 étant par ailleurs de préférence attaché audit puits étanche 19, tandis que le bouchon 20 se fixe avantageusement (de manière amovible) audit puits étanche 19 et/ou audit moyen de fixation 17, et ledit moyen d'attache 26 est lui-même fixé (de manière amovible) audit bouchon 20 et/ou audit puits étanche 19. Une telle configuration permet de conférer au dispositif de rétention 1 une excellente fiabilité relativement à ses fixations à l'équipement et/ou au plancher 2, puisque l'équipement est relié indirectement au plancher 2 et que la liaison plancher 2 / dispositif de rétention 1 formée par le rail d'arrimage 18 et le moyen de fixation 17 est au sec, protégée du liquide. Avantageusement, le bouchon 20 étant amovible, le dispositif de rétention 1 est configuré de manière à ce qu'il soit possible de retirer le bouchon 20 du puits 19. Ceci permet d'accéder au moyen de fixation 17 au sein du puits 19, avantageusement afin de réaliser le verrouillage ou le déverrouillage de ce dernier relativement au rail d'arrimage 18.

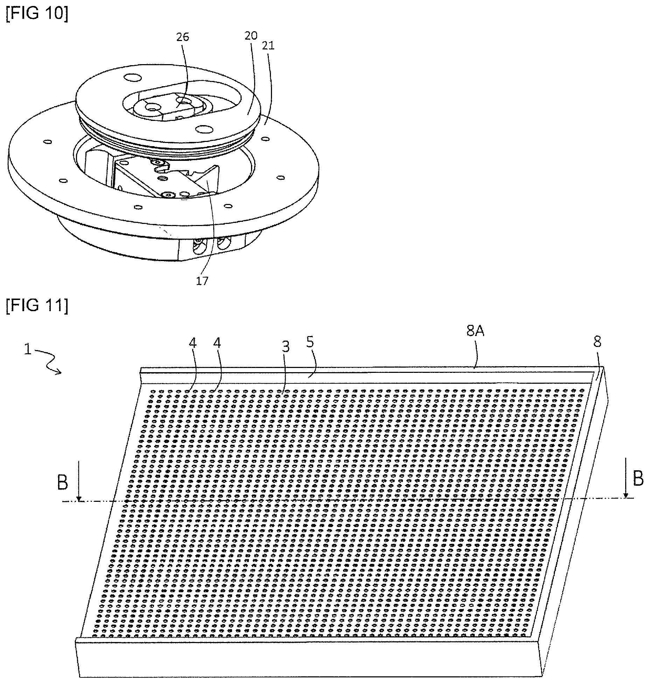

Selon une variante de réalisation particulière de l'invention, illustrée aux figures 11 à 13, le dispositif de rétention de liquide 1 comprend, en-dessous de la paroi supérieure 3 et dans le réservoir de stockage 5, un moyen d'absorption 28, tel qu'un matériau éponge, configuré pour absorber le liquide s'écoulant desdits orifices traversants 4. Comme décrit précédemment, le réservoir de stockage 5 comprend de préférence un fond 6, lequel présente avantageusement une forme de plaque. Le dispositif de rétention 1 comprend avantageusement, selon la variante particulière mentionnée ci-avant, un moyen de pressage 29, 30, 31 configuré pour presser ledit moyen d'absorption 28 contre ledit fond 6 afin d'extraire dudit moyen d'absorption 28 le liquide préalablement absorbé. En particulier, le moyen de pressage 29, 30, 31 comprend au moins une plaque de pressage 29 positionnée entre ladite paroi supérieure 3 et ledit moyen d'absorption 28. Ladite plaque de pressage 29 est donc de préférence sensiblement plate, et destinée à presser le moyen d'absorption 28 contre le fond 6 pour en faire sortir le liquide absorbé. Ledit moyen d'absorption 28 est par exemple formé par une couche de matériau éponge d'une certaine épaisseur, présentant par exemple globalement rectangulaire ou ronde, interpositionnée entre ledit fond 6 et ladite plaque de pressage 29. De façon préférentielle, ledit moyen de pressage 29, 30, 31 comprend au moins un actionneur 30, par exemple un vérin pneumatique ou hydraulique, ledit actionneur 30 étant relié à ladite plaque de pressage 29. Ledit actionneur 30 est en outre relié de manière avantageuse à ladite paroi supérieure 3. En d'autres termes, une extrémité de l'actionneur 30 est reliée à la paroi supérieure 3, tandis que l'extrémité opposée est reliée à la plaque de pressage 29. Ainsi, l'actionneur 30 est de préférence configuré pour être mis en fonctionnement de manière à prendre appui sur ladite paroi supérieure 3 pour pousser ladite plaque de pressage 29 contre ledit moyen d'absorption, afin de presser ce dernier contre ledit fond 6. Le moyen de pressage 29, 30, 31 comprend par exemple un système hydraulique, pneumatique ou oléopneumatique (ou encore électrique) 31 permettant d'actionner ledit actionneur 30. Bien évidemment, ledit moyen de pressage 29, 30, 31 peut comprendre plusieurs actionneurs 30 tels que celui mentionné ci-avant, par exemple au moins quatre actionneurs 30.

Selon une variante particulière de l'invention, non illustrée mais très similaire à la variante précédente, ledit moyen d'absorption 28 est agencé au sein desdits interstices de stockage 9. Dans ce cas, le moyen d'absorption 28 présente avantageusement la forme d'une grille, et est par exemple formé par une grille de matériau éponge. Ladite plaque de pressage 29 est alors préférentiellement agencée au sein desdits interstices de stockage 9. Ladite plaque de pressage 29 présente alors elle aussi une forme qui est de préférence celle d'une grille, et est par exemple formée par une grille métallique ou polymère.

De manière avantageuse, le dispositif de rétention de liquide 1 comprend une face inférieure 35, qui est destinée à venir en regard du plancher intérieur 2 du véhicule, lorsque le dispositif de rétention de liquide 1 est embarqué sur ledit plancher intérieur 2, et qui est pourvue au moins localement d'un joint d'étanchéité 36 (ou « élément barrière »), en particulier au liquide. Ledit joint d'étanchéité 36 est avantageusement destiné à s'intercaler entre la face inférieure 35 du dispositif de rétention de liquide 1 et le plancher intérieur 2 du véhicule, en compression contre le plancher intérieur 2, lorsque le dispositif de rétention de liquide 1 est embarqué sur ledit plancher intérieur 2. La mise en oeuvre d'un tel joint d'étanchéité 36 permet avantageusement de limiter, sinon d'éviter totalement, une infiltration de liquide et/ou d'impuretés diverses (boue, poussières, etc.) entre le dispositif de rétention de liquide 1 et le plancher intérieur 2. En effet, une telle infiltration serait notamment susceptible de générer des problèmes d'encrassement du véhicule, voire de corrosion du plancher intérieur 2. Selon une variante (non illustrée), le joint d'étanchéité 36 peut suivre sensiblement l'intégralité d'un contour périphérique de la face inférieure 35 du dispositif de rétention de liquide 1. Selon une autre variante (non illustrée), le joint d'étanchéité 36 peut recouvrir sensiblement l'intégralité de la surface de la face inférieure 35 du dispositif de rétention de liquide 1. Selon une autre variante encore, qui sera détaillée plus loin en lien avec le mode de réalisation des figures 14 à 18, le joint d'étanchéité 36 peut être agencé localement au niveau d'une zone particulière de la face inférieure 35 du dispositif de rétention de liquide 1, au voisinage en particulier du moyen de vidage 12 du réservoir de stockage 5, afin de limiter en particulier le risque d'une infiltration de liquide sortant par l'orifice 13 du moyen de vidage 12 entre le dispositif de rétention de liquide 1 et le plancher intérieur 2. Selon une variante avantageuse sur le plan de la simplicité de conception et de mise en œuvre, le joint d'étanchéité 36 est en un matériau déformable élastiquement et / ou plastiquement, de sorte que le joint d'étanchéité 36 est déformé par compression contre le plancher intérieur 2, ce qui permet d'assurer ainsi facilement une excellente étanchéité.

Il est à noter ici que, constitue avantageusement une invention à part entière, un dispositif de rétention de liquide 1 destiné à être embarqué sur le plancher intérieur 2 d'un véhicule et conçu et configuré pour recueillir un équipement embarqué par ledit véhicule, par exemple un siège ou une civière, notamment lors d'une mission d'évacuation, le dispositif de rétention de liquide 1 comprenant au moins :
- une paroi supérieure 3 conçue et configurée pour supporter ledit équipement, ladite paroi supérieure 3 étant pourvue d'une pluralité d'orifices traversants 4,
- un réservoir de stockage de liquide 5 agencé au moins en partie en-dessous de ladite paroi supérieure 3, ledit réservoir de stockage 5 étant conçu et configuré pour recueillir le liquide passant à travers lesdits orifices traversants 4,
- une face inférieure 35 pourvue au moins localement d'un joint d'étanchéité 36, qui est destiné à s'intercaler entre ladite face inférieure 35 et le plancher intérieur 2 du véhicule, en compression contre ledit plancher intérieur 2, lorsque le dispositif de rétention de liquide 1 est embarqué sur ledit plancher intérieur 2.

Un tel dispositif de rétention de liquide 1 ne comprendrait alors pas nécessairement de moyen d'attache 26 configuré pour attacher, de préférence de manière réversible, ledit dispositif de rétention de liquide 1 audit équipement embarqué et / ou de moyen de fixation 17 configuré pour attacher, de préférence de manière réversible, le dispositif de rétention 1 au plancher intérieur 2 du véhicule, et en particulier à un rail d'arrimage 18 équipant ledit plancher intérieur 2.

Avantageusement, le dispositif de rétention de liquide 1 est conçu et configuré de sorte que la mise en compression du joint d'étanchéité 36 contre le plancher intérieur 2 du véhicule est assurée non seulement sous l'effet éventuel du poids propre du dispositif de rétention de liquide 1, mais également par la mise en œuvre du ou des moyens de fixation 17 du dispositif de rétention 1 au plancher intérieur 2 du véhicule (comme par exemple dans le mode de réalisation des figures 14 à 18). En d'autres termes, ledit moyen de fixation 17 est alors prévu pour fixer le dispositif de rétention 1 au plancher intérieur 2 du véhicule tout en assurant une mise en compression du joint d'étanchéité 36 contre le plancher intérieur 2. Selon la conception et la configuration du joint d'étanchéité, d'autres moyens (alternatifs ou complémentaires audit moyen de fixation 17) adéquats de mise en compression du joint d'étanchéité 36 contre le plancher intérieur 2 pourront bien évidemment être envisagés.

Selon une variante particulièrement avantageuse, le dispositif de rétention de liquide 1 est conçu et configuré pour assurer un écoulement du liquide recueilli par le réservoir de stockage 5 à l'extérieur du dispositif de rétention de liquide 1, par l'intermédiaire du moyen de vidage 12 évoqué précédemment, vers l'avant du longeron de protection 16, c'est-à-dire avantageusement vers l'avant d'une face latérale externe 37 du longeron de protection 16 qui est orientée vers l'extérieur du dispositif de rétention de liquide 1. Selon cette variante, le longeron de protection 16 définit alors avantageusement une portion de la face inférieure 35 du dispositif de rétention de liquide 1 qui porte ledit joint d'étanchéité 36. En d'autres termes, le joint d'étanchéité 36 est alors localisé au niveau du longeron de protection 16. On évite ainsi avantageusement un reflux du liquide vers l'arrière du longeron de protection 16, entre le dispositif de rétention de liquide 1 et le plancher intérieur 2 du véhicule, lors du vidage du réservoir de stockage 5.

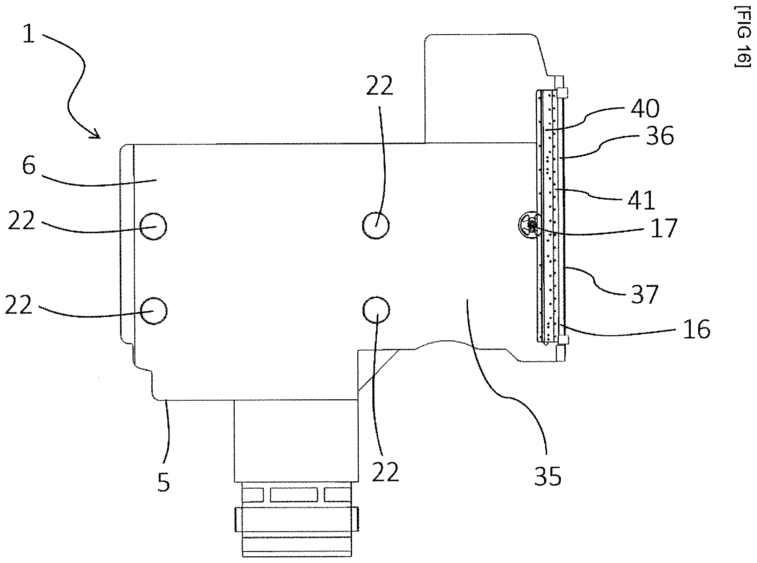

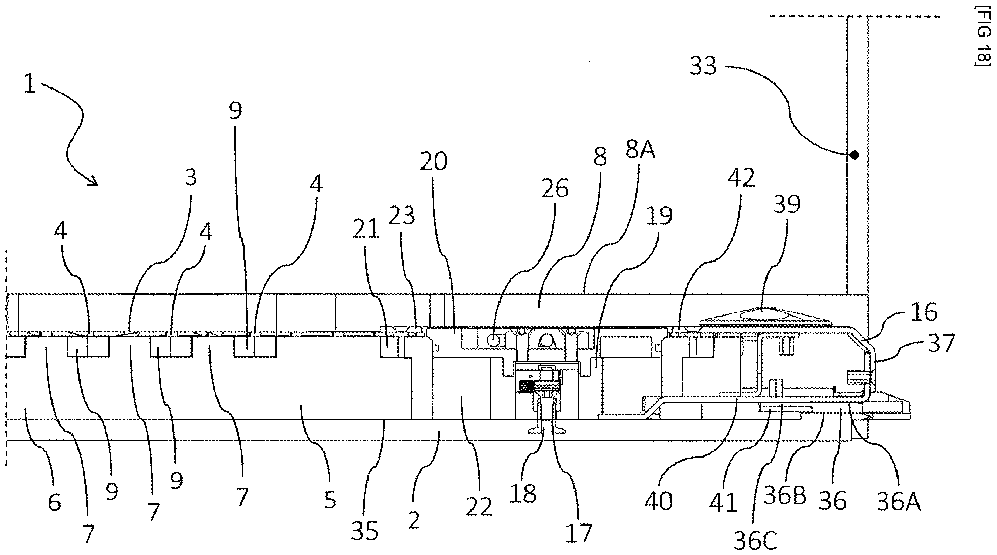

Par exemple, dans le mode de réalisation illustré aux figures 14 à 18, le longeron de protection 16 se présente sous la forme d'un sous-ensemble rigide ayant une section transverse sensiblement en « C ». Les branches de la forme en « C » sont orientées en direction du réservoir de stockage 5, tandis que le ventre de la forme en « C » est orienté vers l'extérieur du dispositif de rétention de liquide 1 et définit ainsi la face latérale externe 37 du longeron de protection 16 évoquée ci-dessus. Dans cet exemple, le dispositif de vidage 12 comprend deux conduits 14, et l'organe d'ouverture / fermeture comprend deux robinets-vannes 32, chacun associés à l'un des conduits 14. Les conduits 14, leurs orifices 13 débouchants et les robinets-vannes 32 sont ici logés à l'intérieur du longeron de protection 16, et sont donc avantageusement protégés mécaniquement par ce dernier. La face latérale externe 37 du longeron de protection 16 est pourvue d'ouvertures 38 traversantes pour permettre au liquide s'écoulant par l'intermédiaire des orifices 13 débouchants de s'écouler vers l'avant du longeron de protection 16. L'organe d'ouverture / fermeture comprend en outre un moyen de commande manuelle 39, agencé sur une face supérieure externe du longeron de protection 16, pour permettre de commander l'ouverture et la fermeture des robinets-vannes 32. Comme illustré en particulier aux figures 16 à 18, le longeron de protection 16 comprend avantageusement une aile inférieure 40, qui définit une portion de la face inférieure 35 du dispositif de rétention de liquide 1, et qui porte le joint d'étanchéité 36. Le longeron de protection 16 est ici solidarisé par vissage au réservoir de stockage 5 par l'intermédiaire de son aile inférieure 40. Le joint d'étanchéité 36 dernier se présente, dans cet exemple non limitatif, sous la forme d'une lame ou plaque allongée en un matériau élastiquement déformable (par exemple, en un matériau élastomère). Présentant une face supérieure d'étanchéité 36A et une face inférieure d'étanchéité 36B opposée, le joint d'étanchéité 36 s'étend longitudinalement suivant une direction d'extension longitudinale du longeron de protection 1. La face supérieure d'étanchéité 36A du joint d'étanchéité 36 est ici plaquée en contact étanche contre une face inférieure externe de l'aile inférieure 40 et maintenu ainsi fermement en position, au niveau d'une languette de fixation 36C que présente le joint d'étanchéité 36, à l'aide d'une plaque de maintien 41 solidarisée par vissage à l'aile inférieure 40 du longeron de protection 16. Laissée libre, la face inférieure d'étanchéité 36B est destinée à venir en contact contre une surface correspondante du plancher intérieur 2 (figures 17 et 18).

Afin d'assurer la fixation du dispositif de rétention de liquide 1 au plancher intérieur 2 du véhicule tout en assurant une mise en compression du joint d'étanchéité 36 contre le plancher intérieur 2, comme évoqué ci-dessus, le dispositif de rétention de liquide 1 comprend avantageusement au moins un puits 19 étanche, au sein duquel est positionné un moyen de fixation 17, tel que déjà envisagé ci-dessus. Le deuxième flasque 23 du puits étanche 19 est ici avantageusement formé par une portion d'une aile supérieure 42 que comprend du longeron de protection 16. Ainsi, lors de la mise en place du dispositif de rétention de liquide 1 sur le plancher intérieur 2 du véhicule, le puits étanche 19 peut être avantageusement positionné au-dessus et en regard d'un rail d'arrimage 18 du véhicule. Le moyen de fixation 17 est alors mis en place au sein du puits étanche 19, de sorte à fixer le dispositif de rétention de liquide 1 au plancher intérieur 2 du véhicule tout en comprimant le joint d'étanchéité 36 contre une surface correspondante du plancher intérieur 2 (figures 17 et 18).

Bien évidemment, il ne s'agit là que d'un exemple de réalisation, et d'autres conformations et/ou configurations de joint d'étanchéité 36 et/ou de longeron de protection 16 pourront être envisagés.

L'invention concerne également en tant que telle, selon un second aspect, un véhicule comprenant un plancher intérieur 2. Selon l'invention, le véhicule comprend en outre au moins un dispositif de rétention de liquide 1 équipant ledit plancher intérieur 2, ledit dispositif de rétention 1 étant conçu et configuré pour recueillir un équipement embarqué par ledit véhicule, par exemple un siège ou une civière, notamment lors d'une mission d'évacuation, et comprenant au moins :
- un moyen d'attache 26 configuré pour attacher, de préférence de manière réversible, ledit dispositif de rétention de liquide 1 audit équipement embarqué, et/ou un moyen de fixation 17 configuré pour attacher, de préférence de manière réversible, le dispositif de rétention 1 au plancher intérieur 2 du véhicule, et en particulier à un rail d'arrimage 18 équipant ledit plancher intérieur 2,
- une paroi supérieure 3 conçue et configurée pour supporter ledit équipement, ladite paroi supérieure 3 étant pourvue d'une pluralité d'orifices traversants 4, et
- un réservoir de stockage 5 de liquide agencé au moins en partie en-dessous de ladite paroi supérieure 3, ledit réservoir de stockage 5 étant conçu et configuré pour recueillir le liquide passant à travers lesdits orifices traversants 4.

Ainsi, la description qui précède concernant le dispositif de rétention de liquide 1 s'applique avantageusement également au véhicule selon l'invention, et inversement. Ledit véhicule comprend donc avantageusement au moins un dispositif de rétention de liquide 1 tel que décrit ci-avant, mais il peut également comprendre plusieurs dispositifs de rétention de liquide 1 qui sont conformes à ce qui a été mentionné précédemment. Le véhicule comprend par exemple une pluralité de dispositifs de rétention de liquide 1 (de préférence similaires) recouvrant au moins une partie, et éventuellement la totalité, du plancher intérieur 2 du véhicule. Chaque dispositif de rétention de liquide 1 est préférentiellement fixé au plancher intérieur 2 du véhicule, avantageusement de manière amovible, c'est-à-dire que chaque dispositif peut de manière avantageuse être solidarisé et désolidarisé du plancher intérieur 2 à volonté, éventuellement manuellement, c'est-à-dire sans nécessiter l'aide d'outil, notamment à l'aide dudit moyen de fixation 17 et dudit rail d'arrimage 18. Ainsi, le véhicule comprend par exemple un ou plusieurs rails d'arrimage 18 équipant ledit plancher intérieur 2, et chaque dispositif de rétention 1 est par exemple fixé, de préférence de manière amovible, à l'un dudit ou desdits rails d'arrimage 18.

Le dispositif de rétention de liquide et le véhicule de l'invention permettent ainsi avantageusement de réaliser des missions de récupération de personnes et / ou de matériel mouillés par un liquide dans des conditions de sécurité et de confort optimales aussi bien en ce qui concerne les personnes, dont un individu secouru et des sauveteurs s'occupant de ce dernier, que les biens, tels que du matériel électrique et électronique du véhicule.

### POSSIBILITE D'APPLICATION INDUSTRIELLE

L'invention trouve son application industrielle dans la conception, la fabrication et l'utilisation de dispositifs de rétention de liquide et de véhicules équipés de tels dispositifs.

## Revendications

1. Dispositif de rétention de liquide (1) destiné à être embarqué sur le plancher intérieur (2) d'un véhicule et conçu et configuré pour recueillir un équipement embarqué par ledit véhicule, par exemple un siège ou une civière, notamment lors d'une mission d'évacuation, le dispositif de rétention comprenant au moins :
- un moyen d'attache (26) configuré pour attacher, de préférence de manière réversible, ledit dispositif de rétention de liquide (1) audit équipement embarqué,
- un moyen de fixation (17) configuré pour attacher, de préférence de manière réversible, le dispositif de rétention (1) au plancher intérieur (2) du véhicule, et en particulier à un rail d'arrimage (18) équipant ledit plancher intérieur (2),
- un réservoir de stockage de liquide (5),
- un puits (19) étanche au liquide, qui traverse ledit réservoir de stockage de liquide (5),
- un bouchon amovible (20) configuré pour boucher de manière étanche au liquide ledit puits étanche (19),
ledit moyen de fixation (17) étant positionné au sein dudit puits étanche (19) et attaché à ce dernier, tandis que le moyen d'attache (26) est fixé audit bouchon (20) et/ou audit puits étanche (19).

2. Dispositif de rétention de liquide (1) selon la revendication précédente, **caractérisé en ce que** ledit réservoir de stockage de liquide (5) est formé par un bac, lequel présente avantageusement une tenue mécanique propre.

3. Dispositif de rétention de liquide (1) selon l'une quelconque des revendications précédentes, **caractérisé en ce que** ledit réservoir (5) est réalisé au moins en partie en mousse à cellules fermées qui de préférence présente une masse volumique comprise entre 30 et 120 kg/m³, de préférence comprise entre 35 et 80 kg/m³.

4. Dispositif de rétention de liquide (1) selon la revendication précédente, **caractérisé en ce que** ledit réservoir (5) comprend au moins un fond (6) à partir duquel s'élève une pluralité de saillies (7) distinctes et distantes les unes des autres sur lesquelles repose ladite paroi supérieure (3), lesdites saillies (7) étant de préférence réalisées en ladite mousse.

5. Dispositif de rétention de liquide (1) selon la revendication précédente, **caractérisé en ce que** ledit réservoir de stockage (5) présente, entre lesdites saillies (7), des interstices de stockage (9) destinés à recueillir le liquide passant à travers lesdits orifices traversants (4), lesdits interstices de stockage (9) présentant de préférence des profondeurs variables.

6. Dispositif de rétention de liquide (1) selon l'une quelconque des revendications précédentes, **caractérisé en ce que** le réservoir de stockage (5) comprend au moins un moyen de vidage (12), lequel comprend au moins un orifice (13) débouchant sur l'extérieur ainsi qu'un organe d'ouverture / fermeture pour commander sélectivement l'écoulement du liquide recueilli par le réservoir de stockage (5) hors de ce dernier.

7. Dispositif de rétention de liquide (1) selon l'une quelconque des revendications précédentes, **caractérisé en ce qu'**il comprend un longeron de protection (16) solidarisé à un bord du réservoir de stockage (5), de manière à protéger ce dernier d'un écrasement provoqué par ledit équipement lorsque celui-ci est placé sur le dispositif de rétention (1), ledit longeron de protection (16) comprenant de préférence une portion en forme de plaque configurée pour être posée sur le plancher intérieur (2) du véhicule et/ou pour être positionnée au niveau d'une ouverture du véhicule.

8. Dispositif de rétention de liquide (1) selon l'une quelconque des revendications précédentes, **caractérisé en ce qu'**il comprend une paroi supérieure (3) conçue et configurée pour supporter ledit équipement, ladite paroi supérieure (3) étant pourvue d'une pluralité d'orifices traversants (4), ledit réservoir de stockage de liquide (5) étant agencé au moins en partie en-dessous de ladite paroi supérieure (3) et étant conçu et configuré pour recueillir le liquide passant à travers lesdits orifices traversants (4), ledit puits (19) traversant ladite paroi supérieure (3).

9. Dispositif de rétention de liquide (1) selon la revendication 8, **caractérisé en ce qu'**il comprend, en-dessous de la paroi supérieure (3) et dans le réservoir de stockage (5), un moyen d'absorption (28), tel qu'un matériau éponge, configuré pour absorber le liquide s'écoulant desdits orifices traversants (4).

10. Dispositif de rétention de liquide (1) selon la revendication précédente, **caractérisé en ce que** le réservoir de stockage (5) comprend un fond (6), et **en ce que** le dispositif de rétention (1) comprend un moyen de pressage (29, 30, 31) configuré pour presser ledit moyen d'absorption (28) contre ledit fond (6) afin d'extraire dudit moyen d'absorption (28) le liquide préalablement absorbé.

11. Dispositif de rétention de liquide (1) selon la revendication précédente, **caractérisé en ce que** le moyen de pressage (29, 30, 31) comprend au moins une plaque de pressage (29) positionnée entre ladite paroi supérieure (3) et ledit moyen d'absorption (28), ledit moyen de pressage (29, 30, 31) comprend de préférence au moins un actionneur (30), par exemple un vérin pneumatique ou hydraulique, ledit actionneur (30) étant relié à ladite plaque de pressage (29).

12. Dispositif de rétention de liquide (1) selon l'une quelconque des revendications précédentes, **caractérisé en ce qu'**il comprend une face inférieure (35) pourvue au moins localement d'un joint d'étanchéité (36), qui est destiné à s'intercaler entre ladite face inférieure (35) et le plancher intérieur (2) du véhicule, en compression contre ledit plancher intérieur (2), lorsque le dispositif de rétention de liquide (1) est embarqué sur ledit plancher intérieur (2).

13. Dispositif de rétention de liquide (1) selon les revendications 6, 7 et 12, caractérisé er ce qu'il est conçu et configuré pour assurer un écoulement du liquide recueilli par le réservoir de stockage (5) à l'extérieur du dispositif de rétention de liquide (1) vers l'avant du longeron de protection (16), et en ce que ledit longeron de protection (16) définit une portion de la face inférieure (35) du dispositif de rétention de liquide (1) qui porte ledit joint d'étanchéité (36).

14. Véhicule comprenant un plancher intérieur (2), **caractérisé en ce qu'**il comprend en outre au moins un dispositif de rétention de liquide (1) équipant ledit plancher intérieur (2) qui est conforme à l'une quelconque des revendications précédentes.

## Patentansprüche

1. Flüssigkeitsauffangvorrichtung (1), die dazu bestimmt ist, auf dem Innenraumboden (2) eines Fahrzeugs aufgenommen zu werden, und so konstruiert und dazu eingerichtet ist, eine in das Fahrzeug geladene Ausrüstung, beispielsweise einen Sitz oder eine Trage, insbesondere bei einer Evakuierungsmission, aufzunehmen, wobei die Flüssigkeitsauffangvorrichtung (1) zumindest Folgendes umfasst:
- ein Befestigungsmittel (26), das dazu eingerichtet ist, die besagte Flüssigkeitsauffangvorrichtung (1) an besagter geladenen Ausrüstung zu befestigen, bevorzugt in reversibler Weise,
- ein Fixiermittel (17), das dazu eingerichtet ist, die Auffangvorrichtung (1) an besagtem Innenraumboden (2) des Fahrzeugs, und insbesondere an einer an dem Innenraumboden (2) angebrachten Verzurrschiene (18), zu befestigen, bevorzugt in reversibler Weise,
- ein Flüssigkeitsspeicherreservoir (5),
- einen für Flüssigkeit dichten Schacht (19), welcher das besagte Flüssigkeitsreservoir (5) durchquert,
- einen entnehmbaren Stopfen (20), der dazu eingerichtet ist, besagten dichten Schacht (19) in flüssigkeitsdichter Weise zu verschließen,
wobei besagtes Fixiermittel (17) innerhalb des besagten dichten Schachts (19) positioniert und dem letzteren befestigt ist, während das besagte Befestigungsmittel (26) an besagtem Stopfen (20) und/oder an besagtem dichten Schacht (19) befestigt ist.

2. Flüssigkeitsauffangvorrichtung (1) gemäß dem vorhergehenden Anspruch, **dadurch gekennzeichnet, dass** besagtes Flüssigkeitsspeicherreservoir (5) durch einen Behälter gebildet wird, welcher vorteilhafterweise eine eigene mechanische Festigkeit aufweist.

3. Flüssigkeitsauffangvorrichtung (1) gemäß einem der vorhergehenden Ansprüche, **dadurch gekennzeichnet, dass** besagtes Reservoir (5) zumindest teilweise aus geschlossenzelligem Schaumstoff besteht, der bevorzugt eine Dichte zwischen 30 und 120 kg/m³ aufweist, besonders bevorzugt zwischen 35 und 80 kg/m³.

4. Flüssigkeitsauffangvorrichtung (1) gemäß dem vorhergehenden Anspruch, **dadurch gekennzeichnet, dass** besagtes Reservoir (5) zumindest einen Boden (6) umfasst, von dem aus eine Vielzahl von voneinander getrennten und beabstandeten Vorsprüngen (7) aufragt, auf denen die obere Wand (3) aufliegt, wobei die Vorsprünge (7) bevorzugt aus besagtem Schaumstoff bestehen.

5. Flüssigkeitsauffangvorrichtung (1) gemäß dem vorhergehenden Anspruch, **dadurch gekennzeichnet, dass** besagtes Speicherreservoir (5) zwischen besagten Vorsprüngen (7) Speicherzwischenräume (9) aufweist, die dazu bestimmt sind, die durch besagten Durchgangsöffnungen (4) hindurchtretende Flüssigkeit aufzunehmen, wobei besagte Speicherzwischenräume (9) vorzugsweise unterschiedliche Tiefen aufweisen.

6. Flüssigkeitsauffangvorrichtung (1) gemäß einem der vorhergehenden Ansprüche, **dadurch gekennzeichnet, dass** das Speicherreservoir (5) zumindest ein Auslassmittel (12) umfasst, welches zumindest eine nach außen mündende Öffnung (13) sowie ein Öffnungs-/Schließelement zum selektiven Steuern des Abflusses der von dem Speicherreservoir (5) aufgefangenen Flüssigkeit aus diesem heraus umfasst.

7. Flüssigkeitsauffangvorrichtung (1) gemäß einem der vorhergehenden Ansprüche, **dadurch gekennzeichnet, dass** sie ein längliches Schutzelement (16) umfasst, das an einer Kante des Speicherreservoirs (5) befestigt ist, in einer Weise, um letztere vor einer Beschädigung hervorgerufen durch besagte Ausrüstung zu schützen, wenn letztere auf der Auffangvorrichtung (1) platziert wird, wobei besagtes längliches Schutzelement (16) bevorzugt einen plattenförmigen Abschnitt umfasst, der dazu eingerichtet ist, auf den Innenraumboden (2) des Fahrzeugs gelegt zu werden und/oder auf Höhe einer Öffnung des Fahrzeugs positioniert zu werden.

8. Flüssigkeitsauffangvorrichtung (1) gemäß einem der vorhergehenden Ansprüche, **dadurch gekennzeichnet, dass** sie eine obere Wand (3) umfasst, die dazu ausgelegt und eingerichtet ist, besagte Ausrüstung zu tragen, wobei besagte obere Wand (3) mit einer Vielzahl von Durchgangsöffnungen (4) versehen ist, wobei das Flüssigkeitsspeicherreservoir (5) zumindest teilweise unterhalb der besagten oberen Wand (3) angeordnet ist und dazu ausgelegt und eingerichtet ist, dass, die durch besagte Durchgangsöffnungen (4) hindurchtretende Flüssigkeit aufzufangen, wobei besagter Schacht (19) durch besagte obere Wand (3) verläuft.

9. Flüssigkeitsauffangvorrichtung (1) gemäß Anspruch 8, **dadurch gekennzeichnet, dass** sie unterhalb der oberen Wand (3) und in dem Speicherreservoir (5) ein Absorptionsmittel (28), wie ein Schwammmaterial, umfasst, welches dazu eingerichtet ist, die durch besagte Durchgangsöffnungen (4) austretende Flüssigkeit zu absorbieren.

10. Flüssigkeitsauffangvorrichtung (1) gemäß dem vorhergehenden Anspruch, **dadurch gekennzeichnet, dass** das Speicherreservoir (5) einen Boden (6) umfasst und dass die Auffangvorrichtung (1) ein Pressmittel (29, 30, 31) umfasst, das dazu eingerichtet ist, besagtes Absorptionsmittel (28) gegen den Boden (6) zu drücken, um die zuvor absorbierte Flüssigkeit aus besagtem Absorptionsmittel (28) zu extrahieren.

11. Flüssigkeitsauffangvorrichtung (1) gemäß dem vorhergehenden Anspruch, **dadurch gekennzeichnet, dass** das Pressmittel (29, 30, 31) zumindest eine Pressplatte (29) umfasst, die zwischen der oberen Wand (3) und besagtem Absorptionsmittel (28) positioniert ist, wobei besagtes Pressmittel (29, 30, 31) bevorzugt zumindest einen Aktuator (30), beispielsweise einen pneumatischen oder hydraulischen Zylinder, umfasst, wobei besagter Aktuator (30) mit besagter Pressplatte (29) verbunden ist.

12. Flüssigkeitsauffangvorrichtung (1) gemäß dem vorhergehenden Anspruch, **dadurch gekennzeichnet, dass** sie eine Unterseite (35) umfasst, die zumindest lokal mit einer Dichtung (36) versehen ist, welche dazu bestimmt ist, zwischen besagter Unterseite (35) und dem Innenraumboden (2) des Fahrzeugs angeordnet zu werden und gegen den besagten Innenraumboden (2) gedrückt zu werden, wenn die Flüssigkeitsauffangvorrichtung (1) auf dem besagten Innenraumboden (2) aufgenommen ist.

13. Flüssigkeitsauffangvorrichtung ( 1) gemäß den Ansprüchen 6, 7 und 12,
**dadurch gekennzeichnet, dass** sie dazu ausgelegt und konfiguriert ist, einen Abfluss der von dem Speicherreservoir (5) aufgefangenen Flüssigkeit aus der Flüssigkeitsauffangvorrichtung (1) nach vorne zu dem länglichen Schutzelement (16) zu gewährleisten, und dadurch, dass besagtes längliches Schutzelement (16) einen Teil der Unterseite (35) der Flüssigkeitsauffangvorrichtung (1) bildet, der besagte Dichtung (36) trägt.

14. Fahrzeug mit einem Innenraumboden (2), **dadurch gekennzeichnet, dass** es außerdem mindestens eine Flüssigkeitsauffangvorrichtung (1) umfasst, mit welcher besagter Innenraumboden (2) ausgestattet ist und welche einem der vorhergehenden Ansprüche entspricht.

## Claims

1. A liquid retention device (1) intended to be carried on the interior floor (2) of a vehicle and designed and configured to receive a piece of equipment carried on board said vehicle, for example a seat or a stretcher, in particular during an evacuation mission, the retention device comprising at least:
- an attachment means (26) configured to attach, preferably in a reversible way, said liquid retention device (1) to said on-board equipment,
- a fastening means (17) configured to attach, preferably in a reversible way, the retention device (1) to the interior floor (2) of the vehicle, and in particular to a lashing rail (18) fitted to said interior floor (2),
- a liquid storage tank (5),
- a liquid-tight well (19), which passes through said storage tank (5),
- a removable plug (20) configured to seal said tight well (19) in a liquid-tight manner,
said fastening means (17) being positioned within said tight well (19) and attach to the latter, whereas the attachment means (26) is fixed to said plug (20) and/or to said tight well (19).

2. The liquid retention device (1) according to the preceding claim, **characterized in that** said liquid storage tank (5) is formed by a tray, which advantageously has its own mechanical strength.

3. The liquid retention device (1) according to any one of the preceding claims, **characterized in that** said tank (5) is at least partly made of closed-cell foam, which preferably has a density between 30 and 120 kg/m³, preferably between 35 and 80 kg/m³.

4. The liquid retention device (1) according the preceding claim, **characterized in that** said tank (5) comprises at least a bottom (6), from which rise a plurality of projections (7) that are distinct and distant from each other, on which is supported said upper wall (3), said projections (7) being preferably made of said foam.

5. The liquid retention device (1) according to the preceding claim, **characterized in that** said storage tank (5) has, between said projections (7), storage interstices (9) intended to collect the liquid passing through said through-holes (4), said storage interstices (9) preferably having variable depths.

6. The liquid retention device (1) according to any one of the preceding claims, **characterized in that** the storage tank (5) comprises at least one draining means (12), which comprises at least one hole (13) opening to the outside, as well as an opening 1 closing member to selectively control the draining of the liquid collected by the storage tank (5) out of the latter.

7. The liquid retention device (1) according to any one of the preceding claims, **characterized in that** it comprises a protective stringer (16) secured to an edge of the storage tank (5), in order to protect the latter from a crushing caused by said equipment when the latter is placed on the retention device (1), said protective stringer (16) preferably comprising a plate-shaped portion, configured to be placed on the interior floor (2) of the vehicle and/or to be positioned at an opening of the vehicle.

8. The liquid retention device (1) according to any one of the preceding claims, **characterized in that** it comprises an upper wall (3) designed and configured to support said equipment, said upper wall (3) being provided with a plurality of through-holes (4), said liquid storage tank (5) being at least partly arranged below said upper wall (3), and being designed and configured to collect the liquid passing through said through-holes (4), said tight well (19) passing through said upper wall (3).

9. The liquid retention device (1) according to claim 8, **characterized in that** it comprises, below the upper wall (3) and in the storage tank (5), an absorption means (28), such as a sponge material, configured to absorb the liquid flowing from said through-holes (4).

10. The liquid retention device (1) according to the preceding claim, **characterized in that** the storage tank (5) comprises a bottom (6), and **in that** the retention device (1) comprises pressing means (29, 30, 31) configured to press said absorption means (28) against said bottom (6) in order to extract said previously absorbed liquid from said absorption means (28).

11. The liquid retention device (1) according to the preceding claim, **characterized in that** the pressing means (29, 30, 31) comprises at least one pressing plate (29) positioned between said upper wall (3) and said absorption means (28), said pressing means (29, 30, 31) comprises at least one actuator (30), for example a pneumatic or hydraulic cylinder, said actuator (30) being connected to said pressing plate (29).

12. The liquid retention device (1) according to any one of the preceding claims, **characterized in that** it comprises a lower face (35) provided at least locally with a sealing gasket (36), which is intended to be interposed between said lower face (35) and the interior floor (2) of the vehicle, in compression against said interior floor (2), when the liquid retention device (1) is carried on said interior floor (2).

13. The liquid retention device (1) according to claims 6, 7 and 12, **characterized in that** it is designed and configured to ensure the draining of the liquid collected by the storage tank (5) out of the liquid retention device (1) towards the front of the protective stringer (16), and **in that** said protective stringer (16) defines a portion of the lower face (35) of the liquid retention device (1) that carries said sealing gasket (36).

14. A vehicle comprising an interior floor (2), **characterized in that** it further comprises at least one liquid retention device (1) fitted to said interior floor (2) which conforms to any of the preceding claims.
